# EUROPEAN PATENT APPLICATION

(11) **EP 4 518 282 A1**
(43) Date of publication of application: **05.03.2025**
(21) Application number: 23796695.7
(22) Date of filing: 19.04.2023
(51) Int. Cl.: H04L 47/2475, H04W 28/02

(54) **PACKET DATA PROCESSING METHOD AND DEVICE**

(30) Priority: 28.04.2022 KR 20220053088; 07.04.2023 KR 20230045834
(71) Applicant: KT Corporation, Seongnam-si, Gyeonggi-do 13606 (KR)
(72) Inventor: HONG, Sung Pyo, Seongnam-si Gyeonggi-do 13606 (KR)
(74) Representative: AWA Switzerland
(86) International application number: PCT/KR2023/005312
(87) International publication number: WO 2023/211048

(57) **Abstract**

Provided are a method and a device for processing an application data flow. The method of user equipment may include receiving a higher layer message including radio resource configuration information configured for transmission or reception of specific application data, configuring the radio resource configuration information in the terminal, and classifying and processing user plane data of the application data on the basis of the radio resource configuration information.

## Description

### Technical Field

The disclosure relates to a technology for processing packet data.

### Background Art

eXtended reality (XR) and cloud gaming (CG) are broad terms referring to various types of augmented, virtual and mixed environments in human-machine and human-human communication performed with the help of handheld and wearable terminals. eXtended reality (XR) is used as a broad term encompassing augmented reality (AR), mixed reality (MR), and virtual reality (VR). Cloud gaming represents a use case in which most computations related to gaming are offloaded from a terminal to an edge or remote server. XR applications and cloud computing/gaming typically require high throughput and low latency.

Many XR and CG use cases are characterized by quasi-periodic traffic with a high data rate (having a possible jitter) in a downlink video stream. There are often paired with a frequent uplink (e.g., pose/control updates) and/or uplink video stream. Both downlink and uplink traffic must adhere to a relatively strict packet delay budget (PDB).

Further, many XR and CG terminals have limited battery power. However, the current UE discontinuous reception (DRX) configuration is unsuitable due to the non-integer period of XR traffic, variable XR data rate, and the quasi-periodic nature of XR period.

The XR and CG service sets have diversity. Data streams (e.g., video) may change dynamically while the service is running through a radio network (e.g., NR).

Thus, packets within one frame are dependent on each other. However, typical mobile communication technology does not provide a specific method for enabling a terminal, base station, or core network to effectively recognize and process XR application traffic.

### Detailed Description of the Invention

### Technical Problem

In the foregoing background, the disclosure introduces a configuration method and device for providing packet data processing that considers application traffic characteristics using information provided from the higher/application layer in a wireless network.

### Technical Solution

In an aspect, the present disclosure provides a method for processing an application data flow by a user equipment (UE). The method nay include receiving a higher layer message including radio resource configuration information configured to transmit/receive specific application data, configuring the radio resource configuration information in the UE, and distinctly processing user plane data of the application data based on the radio resource configuration information.

In another aspect, the present disclosure provides a method for processing an application data flow by a base station. The method may include transmitting, to a UE, a higher layer message including radio resource configuration information configured to transmit/receive specific application data, and distinctly processing user plane data of the application data based on the radio resource configuration information.

In another aspect, the present disclosure provides a user equipment (UE) processing an application data flow. The UE may include a receiver receiving a higher layer message including radio resource configuration information configured to transmit/receive specific application data, and a controller configuring the radio resource configuration information in the UE and distinctly processing user plane data of the application data based on the radio resource configuration information.

In another aspect, the present disclosure provides a base station processing an application data flow. The base station may include a transmitter transmitting, to a UE, a higher layer message including radio resource configuration information configured to transmit/receive specific application data, and a controller distinctly processing user plane data of the application data based on the radio resource configuration information.

### Advantageous Effects

According to the present embodiments, UEs, base stations, or core network entities in a radio network may effectively recognize and process XR application traffic.

### Brief Description of the Drawings

FIG. 1 is a view schematically illustrating an NR wireless communication system in accordance with embodiments of the present disclosure;
FIG. 2 is a view schematically illustrating a frame structure in an NR system in accordance with embodiments of the present disclosure;
FIG. 3 is a view for explaining resource grids supported by a radio access technology in accordance with embodiments of the present disclosure;
FIG. 4 is a view for explaining bandwidth parts supported by a radio access technology in accordance with embodiments of the present disclosure;
FIG. 5 is a view illustrating an example of a synchronization signal block in a radio access technology in accordance with embodiments of the present disclosure;
FIG. 6 is a signal diagram for explaining a random access procedure in a radio access technology in accordance with embodiments of the present disclosure;
FIG. 7 is a view for explaining CORESET;
FIG. 8 is a view illustrating an example of a structure for implementing a 5G-XR function in a 5G system;
FIG. 9 is a flowchart illustrating operations of a UE according to an embodiment;
FIG. 10 is a flowchart for describing operations of a base station according to an embodiment;
FIG. 11 is a view exemplarily illustrating a PDU session resource setup request transfer information element according to an embodiment;
FIG. 12 is a view exemplarily illustrating a PDU session resource modify request transfer information element according to an embodiment;
FIG. 13 is a view exemplarily illustrating an SDAP-Config information element according to an embodiment;
FIG. 14 is a view exemplarily illustrating a PDU session resource setup request transfer information element according to another embodiment;
FIG. 15 is a view exemplarily illustrating a PDU session resource modify request transfer information element according to another embodiment;
FIG. 16 is a view exemplarily illustrating an SDAP-Config information element according to another embodiment;
FIG. 17 is a view illustrating a DL SDAP data PDU format with SDAP header according to an embodiment;
FIG. 18 is a view illustrating a UL SDAP data PDU format with SDAP header according to an embodiment;
FIG. 19 is a block diagram illustrating a UE according to an embodiment; and
FIG. 20 is a block diagram illustrating a base station according to an embodiment.

### Mode for Carrying out the Invention

Hereinafter, some embodiments of the present disclosure will be described in detail with reference to the accompanying illustrative drawings. In the drawings, like reference numerals are used to denote like elements throughout the drawings, even if they are shown on different drawings. Further, in the following description of the present disclosure, a detailed description of known functions and configurations incorporated herein will be omitted when it may make the subject matter of the present disclosure rather unclear. When the expression "include", "have", "comprise", or the like as mentioned herein is used, any other part may be added unless the expression "only" is used. When an element is expressed in the singular, the element may cover the plural form unless a special mention is explicitly made of the element.

In addition, terms, such as first, second, A, B, (A), (B) or the like may be used herein when describing components of the present disclosure. Each of these terminologies is not used to define an essence, order or sequence of a corresponding component but used merely to distinguish the corresponding component from other component(s).

In describing the positional relationship between components, if two or more components are described as being "connected", "combined", or "coupled" to each other, it should be understood that two or more components may be directly "connected", "combined", or "coupled" to each other, and that two or more components may be "connected", "combined", or "coupled" to each other with another component "interposed" therebetween. In this case, another component may be included in at least one of the two or more components that are "connected", "combined", or "coupled" to each other.

In the description of a sequence of operating methods or manufacturing methods, for example, the expressions using "after", "subsequent to", "next", "before", and the like may also encompass the case in which operations or processes are performed discontinuously unless "immediately" or "directly" is used in the expression.

Numerical values for components or information corresponding thereto (e.g., levels or the like), which are mentioned herein, may be interpreted as including an error range caused by various factors (e.g., process factors, internal or external impacts, noise, etc.) even if an explicit description thereof is not provided.

The wireless communication system in the present specification refers to a system for providing various communication services, such as a voice service and a data service, using radio resources. The wireless communication system may include a user equipment (UE), a base station, a core network, and the like.

Embodiments disclosed below may be applied to a wireless communication system using various radio access technologies. For example, the embodiments may be applied to various radio access technologies such as code division multiple access (CDMA), frequency division multiple access (FDMA), time division multiple access (TDMA), orthogonal frequency division multiple access (OFDMA), single-carrier frequency division multiple access (SC-FDMA), non-orthogonal multiple access (NOMA), or the like. In addition, the radio access technology may refer to respective generation communication technologies established by various communication organizations, such as 3GPP, 3GPP2, Wi-Fi, Bluetooth, IEEE, ITU, or the like, as well as a specific access technology. For example, CDMA may be implemented as a wireless technology such as universal terrestrial radio access (UTRA) or CDMA2000. TDMA may be implemented as a wireless technology such as global system for mobile communications (GSM)/general packet radio service (GPRS)/enhanced data rates for GSM evolution (EDGE). OFDMA may be implemented as a wireless technology such as IEEE (Institute of Electrical and Electronics Engineers) 802.11 (Wi-Fi), IEEE 802.16 (WiMAX), IEEE 802-20, evolved UTRA (E-UTRA), and the like. IEEE 802.16m is evolution of IEEE 802.16e, which provides backward compatibility with systems based on IEEE 802.16e. UTRA is a part of a universal mobile telecommunications system (UMTS). 3GPP (3rd-generation partnership project) LTE (long-term evolution) is a part of E-UMTS (evolved UMTS) using evolved-UMTS terrestrial radio access (E-UTRA), which adopts OFDMA in a downlink and SC-FDMA in an uplink. As described above, the embodiments may be applied to radio access technologies that have been launched or commercialized, and may be applied to radio access technologies that are being developed or will be developed in the future.

The UE used in the specification must be interpreted as a broad meaning that indicates a device including a wireless communication module that communicates with a base station in a wireless communication system. For example, the UE includes user equipment (UE) in WCDMA, LTE, NR, HSPA, IMT-2020 (5G or New Radio), and the like, a mobile station in GSM, a user terminal (UT), a subscriber station (SS), a wireless device, and the like. In addition, the UE may be a portable user device, such as a smart phone, or may be a vehicle, a device including a wireless communication module in the vehicle, and the like in a V2X communication system according to the usage type thereof. In the case of a machine-type communication (MTC) system, the UE may refer to an MTC terminal, an M2M terminal, or a URLLC terminal, which employs a communication module capable of performing machine-type communication.

A base station or a cell in the present specification refers to an end that communicates with a UE through a network and encompasses various coverage regions such as a Node-B, an evolved Node-B (eNB), a gNode-B, a low-power node (LPN), a sector, a site, various types of antennas, a base transceiver system (BTS), an access point, a point (e.g., a transmission point, a reception point, or a transmission/reception point), a relay node, a megacell, a macrocell, a microcell, a picocell, a femtocell, a remote radio head (RRH), a radio unit (RU), a small cell, and the like. In addition, the cell may be used as a meaning including a bandwidth part (BWP) in the frequency domain. For example, the serving cell may refer to an active BWP of a UE.

The various cells listed above are provided with a base station controlling one or more cells, and the base station may be interpreted as two meanings. The base station may be 1) a device for providing a megacell, a macrocell, a microcell, a picocell, a femtocell, or a small cell in connection with a wireless region, or the base station may be 2) a wireless region itself. In the above description 1), the base station may be the devices controlled by the same entity and providing predetermined wireless regions or all devices interacting with each other and cooperatively configuring a wireless region. For example, the base station may be a point, a transmission/reception point, a transmission point, a reception point, and the like according to the configuration method of the wireless region. In the above description 2), the base station may be the wireless region in which a user equipment (UE) may be enabled to transmit data to and receive data from the other UE or a neighboring base station.

In this specification, the cell may refer to coverage of a signal transmitted from a transmission/reception point, a component carrier having coverage of a signal transmitted from a transmission/reception point (or a transmission point), or a transmission/reception point itself.

An uplink (UL) refers to a scheme of transmitting data from a UE to a base station, and a downlink (DL) refers to a scheme of transmitting data from a base station to a UE. The downlink may mean communication or communication paths from multiple transmission/reception points to a UE, and the uplink may mean communication or communication paths from a UE to multiple transmission/reception points. In the downlink, a transmitter may be a part of the multiple transmission/reception points, and a receiver may be a part of the UE. In addition, in the uplink, the transmitter may be a part of the UE, and the receiver may be a part of the multiple transmission/reception points.

The uplink and downlink transmit and receive control information over a control channel, such as a physical downlink control channel (PDCCH) and a physical uplink control channel (PUCCH). The uplink and downlink transmit and receive data over a data channel such as a physical downlink shared channel (PDSCH) and a physical uplink shared channel (PUSCH). Hereinafter, the transmission and reception of a signal over a channel, such as PUCCH, PUSCH, PDCCH, PDSCH, or the like, may be expressed as "PUCCH, PUSCH, PDCCH, PDSCH, or the like is transmitted and received".

For the sake of clarity, the following description will focus on 3GPP LTE/LTE-A/NR (New Radio) communication systems, but technical features of the disclosure are not limited to the corresponding communication systems.

The 3GPP has been developing a 5G (5th-Generation) communication technology in order to meet the requirements of a next-generation radio access technology of ITU-R after studying 4G (4th-generation) communication technology. Specifically, 3GPP is developing, as a 5G communication technology, LTE-A pro by improving the LTE-Advanced technology so as to conform to the requirements of ITU-R and a new NR communication technology that is totally different from 4G communication technology. LTE-A pro and NR all refer to the 5G communication technology. Hereinafter, the 5G communication technology will be described on the basis of NR unless a specific communication technology is specified.

Various operating scenarios have been defined in NR in consideration of satellites, automobiles, new verticals, and the like in the typical 4G LTE scenarios so as to support an enhanced mobile broadband (eMBB) scenario in terms of services, a massive machine-type communication (mMTC) scenario in which UEs spread over a broad region at a high UE density, thereby requiring low data rates and asynchronous connections, and an ultra-reliability and low-latency (URLLC) scenario that requires high responsiveness and reliability and supports highspeed mobility.

In order to satisfy such scenarios, NR introduces a wireless communication system employing a new waveform and frame structure technology, a low-latency technology, a superhigh frequency band (mmWave) support technology, and a forward compatible provision technology. In particular, the NR system has various technological changes in terms of flexibility in order to provide forward compatibility. The primary technical features of NR will be described below with reference to the drawings.

### <Overview of NR System>

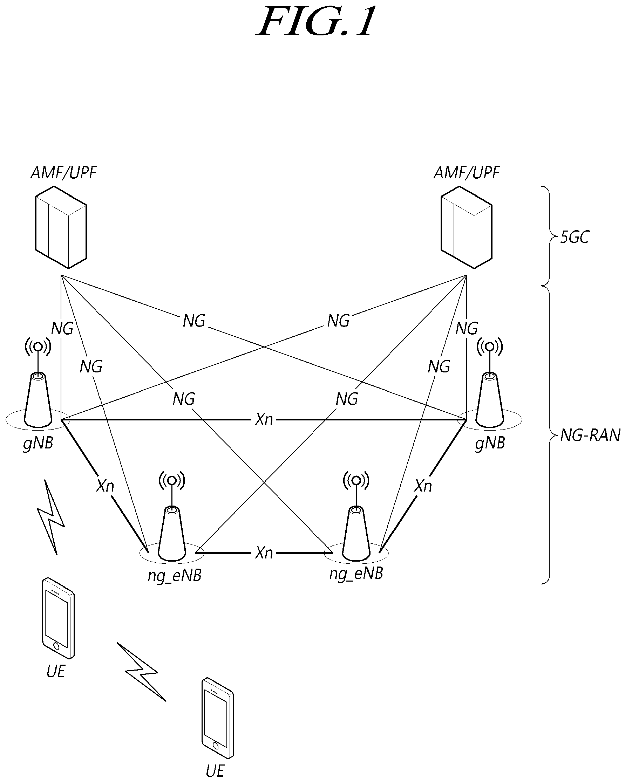

FIG. 1 is a view schematically illustrating an NR system to which the present embodiment is applicable.

Referring to FIG. 1, the NR system is divided into a 5G core network (5GC) and an NG-RAN part. The NG-RAN includes gNBs and ng-eNBs providing user plane (SDAP/PDCP/RLC/MAC/PHY) and user equipment (UE) control plane (RRC) protocol ends. The gNBs or the gNB and the ng-eNB are connected to each other through Xn interfaces. The gNB and the ng-eNB are connected to the 5GC through NG interfaces, respectively. The 5GC may be configured to include an access and mobility management function (AMF) for managing a control plane, such as a UE connection and mobility control function, and a user plane function (UPF) controlling user data. NR supports both frequency bands below 6 GHz (frequency range 1 FR1 FR1) and frequency bands equal to or greater than 6 GHz (frequency range 2 FR2 FR2).

The gNB denotes a base station that provides a UE with an NR user plane and control plane protocol end. The ng-eNB denotes a base station that provides a UE with an E-UTRA user plane and control plane protocol end. The base station described in the present specification should be understood as encompassing the gNB and the ng-eNB. However, the base station may be also used to refer to the gNB or the ng-eNB separately from each other, as necessary.

### <NR Waveform, Numerology, and Frame Structure>

NR uses a CP-OFDM waveform using a cyclic prefix for downlink transmission and uses CP-OFDM or DFT-s-OFDM for uplink transmission. OFDM technology is easy to combine with a multiple-input multiple-output (MIMO) scheme and allows a low-complexity receiver to be used with high frequency efficiency.

Since the three scenarios described above have different requirements for data rates, delay rates, coverage, and the like from each other in NR, it is necessary to efficiently satisfy the requirements for each scenario over frequency bands constituting the NR system. To this end, a technique for efficiently multiplexing radio resources based on a plurality of different numerologies has been proposed.

Specifically, the NR transmission numerology is determined on the basis of subcarrier spacing and a cyclic prefix (CP). As shown in Table 1 below, "µ" is used as an exponential value of 2 so as to be changed exponentially on the basis of 15 kHz.

**[Table 1]**

| µ | Subcarrier spacing | Cyclic prefix | Supported for data | Supported for synch |
|---|---|---|---|---|
| 0 | 15 | normal | Yes | Yes |
| 1 | 30 | normal | Yes | Yes |
| 2 | 60 | Normal, Extended | Yes | No |
| 3 | 120 | normal | Yes | Yes |
| 4 | 240 | normal | No | Yes |

As shown in Table 1 above, NR may have five types of numerologies according to subcarrier spacing. This is different from LTE, which is one of the 4G-communication technologies, in which the subcarrier spacing is fixed to 15 kHz. Specifically, in NR, subcarrier spacing used for data transmission is 15, 30, 60, or 120 kHz, and subcarrier spacing used for synchronization signal transmission is 15, 30, 120, or 240 kHz. In addition, an extended CP is applied only to the subcarrier spacing of 60 kHz. A frame that includes 10 subframes each having the same length of 1 ms and has a length of 10 ms is defined in the frame structure in NR. One frame may be divided into half frames of 5 ms, and each half frame includes 5 subframes. In the case of a subcarrier spacing of 15 kHz, one subframe includes one slot, and each slot includes 14 OFDM symbols.

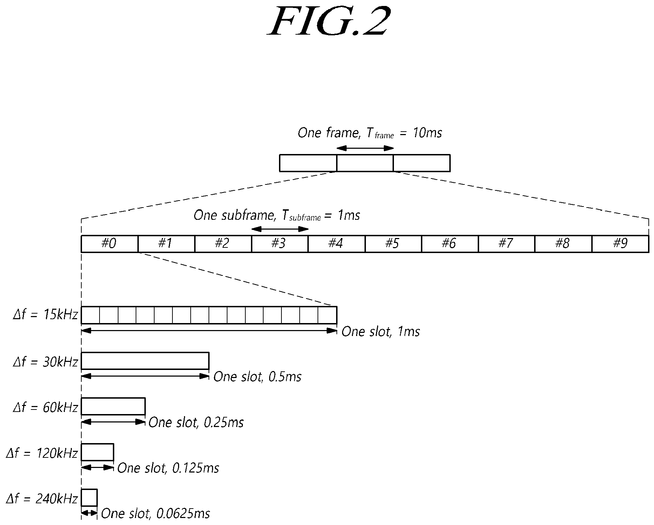

FIG. 2 is a view for explaining a frame structure in an NR system to which the present embodiment may be applied.

Referring to FIG. 2, a slot includes 14 OFDM symbols, which are fixed, in the case of a normal CP, but the length of the slot in the time domain may be varied depending on subcarrier spacing. For example, in the case of a numerology having a subcarrier spacing of 15 kHz, the slot is configured to have the same length of 1 ms as that of the subframe. On the other hand, in the case of a numerology having a subcarrier spacing of 30 kHz, the slot includes 14 OFDM symbols, but one subframe may include two slots each having a length of 0.5 ms. That is, the subframe and the frame may be defined using a fixed time length, and the slot may be defined as the number of symbols such that the time length thereof is varied depending on the subcarrier spacing.

NR defines a basic unit of scheduling as a slot and also introduces a minislot (or a subslot or a non-slot-based schedule) in order to reduce a transmission delay of a radio section. If wide subcarrier spacing is used, the length of one slot is shortened in inverse proportion thereto, thereby reducing a transmission delay in the radio section. A minislot (or subslot) is intended to efficiently support URLLC scenarios, and the minislot may be scheduled in 2, 4, or 7 symbol units.

In addition, unlike LTE, NR defines uplink and downlink resource allocation as a symbol level in one slot. In order to reduce a HARQ delay, the slot structure capable of directly transmitting HARQ ACK/NACK in a transmission slot has been defined. Such a slot structure is referred to as a "self-contained structure", which will be described.

NR was designed to support a total of 256 slot formats, and 62 slot formats thereof are used in 3GPP Rel-15. In addition, NR supports a common frame structure constituting an FDD or TDD frame through combinations of various slots. For example, NR supports i) a slot structure in which all symbols of a slot are configured for a downlink, ii) a slot structure in which all symbols are configured for an uplink, and iii) a slot structure in which downlink symbols and uplink symbols are mixed. In addition, NR supports data transmission that is scheduled to be distributed to one or more slots. Accordingly, the base station may inform the UE of whether the slot is a downlink slot, an uplink slot, or a flexible slot using a slot format indicator (SFI). The base station may inform a slot format by instructing, using the SFI, the index of a table configured through UE-specific RRC signaling. Further, the base station may dynamically instruct the slot format through downlink control information (DCI) or may statically or quasi-statically instruct the same through RRC signaling.

### <Physical Resources of NR>

With regard to physical resources in NR, antenna ports, resource grids, resource elements, resource blocks, bandwidth parts, and the like are taken into consideration.

The antenna port is defined to infer a channel carrying a symbol on an antenna port from the other channel carrying another symbol on the same antenna port. If large-scale properties of a channel carrying a symbol on an antenna port can be inferred from the other channel carrying a symbol on another antenna port, the two antenna ports may have a quasi-co-located or quasi-co-location (QC/QCL) relationship. The large-scale properties include at least one of delay spread, Doppler spread, a frequency shift, an average received power, and a received timing.

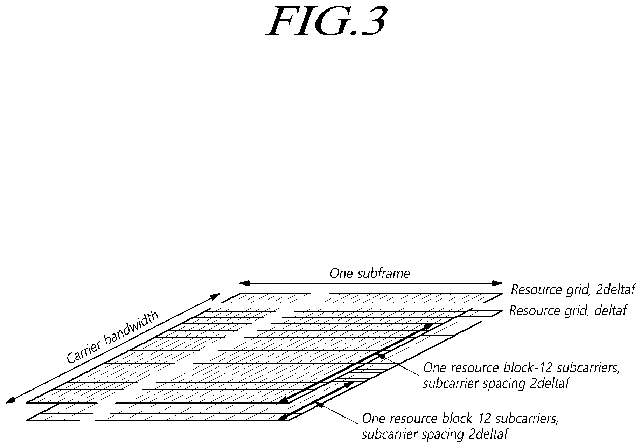

FIG. 3 illustrates resource grids supported by a radio access technology in accordance with embodiments of the present disclosure.

Referring to FIG. 3, resource grids may exist according to respective numerologies because NR supports a plurality of numerologies in the same carrier. In addition, the resource grids may exist depending on antenna ports, subcarrier spacing, and transmission directions.

A resource block includes 12 subcarriers and is defined only in the frequency domain. In addition, a resource element includes one OFDM symbol and one subcarrier. Therefore, as shown in FIG. 3, the size of one resource block may be varied according to the subcarrier spacing. Further, "Point A" that acts as a common reference point for the resource block grids, a common resource block, and a virtual resource block are defined in NR.

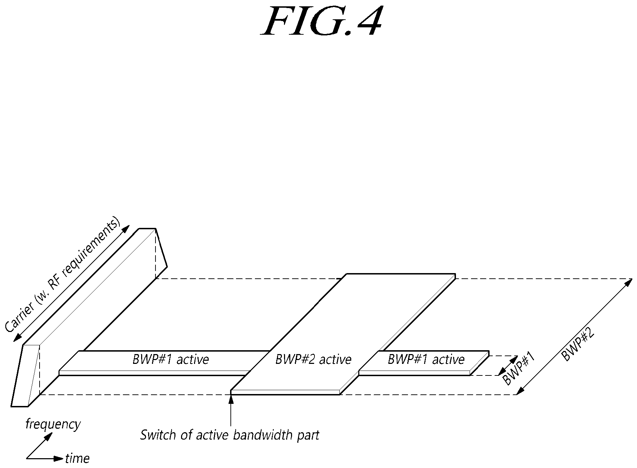

FIG. 4 illustrates bandwidth parts supported by a radio access technology in accordance with embodiments of the present disclosure.

Unlike LTE in which the carrier bandwidth is fixed to 20 MHz, the maximum carrier bandwidth is configured as 50 MHz to 400 MHz depending on the subcarrier spacing in NR. Therefore, it is not assumed that all UEs use the entire carrier bandwidth. Accordingly, as shown in FIG. 4, bandwidth parts (BWPs) may be specified within the carrier bandwidth in NR so that the UE may use the same. In addition, the bandwidth part may be associated with one numerology, may include a subset of consecutive common resource blocks, and may be activated dynamically over time. The UE has up to four bandwidth parts in each of the uplink and the downlink. The UE transmits and receives data using an activated bandwidth part during a given time.

In the case of a paired spectrum, uplink and downlink bandwidth parts are configured independently. In the case of an unpaired spectrum, in order to prevent unnecessary frequency re-tuning between a downlink operation and an uplink operation, the downlink bandwidth part and the uplink bandwidth part are configured in pairs to share a center frequency.

### <Initial Access in NR>

In NR, a UE performs a cell search and a random access procedure in order to access and communicates with a base station.

The cell search is a procedure of the UE for synchronizing with a cell of a corresponding base station using a synchronization signal block (SSB) transmitted from the base station and acquiring a physical-layer cell ID and system information.

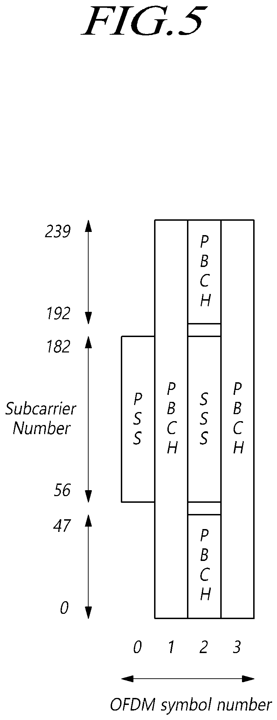

FIG. 5 illustrates an example of a synchronization signal block in a radio access technology in accordance with embodiments of the present disclosure.

Referring to FIG. 5, the SSB includes a primary synchronization signal (PSS) and a secondary synchronization signal (SSS), which occupy one symbol and 127 subcarriers, and PBCHs spanning three OFDM symbols and 240 subcarriers.

The UE monitors the SSB in the time and frequency domain, thereby receiving the SSB.

The SSB may be transmitted up to 64 times for 5 ms. A plurality of SSBs are transmitted by different transmission beams within a time of 5 ms, and the UE performs detection on the assumption that the SSB is transmitted every 20 ms based on a specific beam used for transmission. The number of beams that may be used for SSB transmission within 5 ms may be increased as the frequency band is increased. For example, up to 4 SSB beams may be transmitted at a frequency band of 3 GHz or less, and up to 8 SSB beams may be transmitted at a frequency band of 3 to 6 GHz. In addition, the SSBs may be transmitted using up to 64 different beams at a frequency band of 6 GHz or more.

One slot includes two SSBs, and a start symbol and the number of repetitions in the slot are determined according to subcarrier spacing as follows.

Unlike the SS in the typical LTE system, the SSB is not transmitted at the center frequency of a carrier bandwidth. That is, the SSB may also be transmitted at the frequency other than the center of the system band, and a plurality of SSBs may be transmitted in the frequency domain in the case of supporting a broadband operation. Accordingly, the UE monitors the SSB using a synchronization raster, which is a candidate frequency position for monitoring the SSB. A carrier raster and a synchronization raster, which are the center frequency position information of the channel for the initial connection, were newly defined in NR, and the synchronization raster may support a fast SSB search of the UE because the frequency spacing thereof is configured to be wider than that of the carrier raster.

The UE may acquire an MIB over the PBCH of the SSB. The MIB (master information block) includes minimum information for the UE to receive remaining minimum system information (RMSI) broadcast by the network. In addition, the PBCH may include information on the position of the first DM-RS symbol in the time domain, information for the UE to monitor SIB1 (e.g., SIB1 numerology information, information related to SIB1 CORESET, search space information, PDCCH-related parameter information, etc.), offset information between the common resource block and the SSB (the position of an absolute SSB in the carrier is transmitted via SIB1), and the like. The SIB1 numerology information is also applied to some messages used in the random access procedure for the UE to access the base station after completing the cell search procedure. For example, the numerology information of SIB1 may be applied to at least one of the messages 1 to 4 for the random access procedure.

The above-mentioned RMSI may mean SIB1 (system information block 1), and SIB1 is broadcast periodically (e.g., 160 ms) in the cell. SIB1 includes information necessary for the UE to perform the initial random access procedure, and SIB 1 is periodically transmitted over a PDSCH. In order to receive SIB1, the UE must receive numerology information used for the SIB1 transmission and the CORESET (control resource set) information used for scheduling of SIB1 over a PBCH. The UE identifies scheduling information for SIB1 using SI-RNTI in the CORESET. The UE acquires SIB1 on the PDSCH according to scheduling information. The remaining SIBs other than SIB1 may be periodically transmitted, or the remaining SIBs may be transmitted according to the request of the UE.

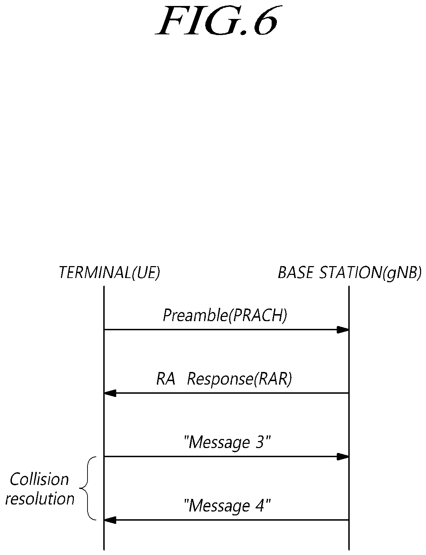

FIG. 6 is a view for explaining a random access procedure in a radio access technology to which the present embodiment is applicable.

Referring to FIG. 6, if a cell search is completed, the UE transmits a random access preamble for random access to the base station. The random access preamble is transmitted over a PRACH. Specifically, the random access preamble is periodically transmitted to the base station over the PRACH that includes consecutive radio resources in a specific slot repeated. In general, a contention-based random access procedure is performed when the UE makes initial access to a cell, and a non-contention-based random access procedure is performed when the UE performs random access for beam failure recovery (BFR).

The UE receives a random access response to the transmitted random access preamble. The random access response may include a random access preamble identifier (ID), UL Grant (uplink radio resource), a temporary C-RNTI (temporary cell-radio network temporary identifier), and a TAC (time alignment command). Since one random access response may include random access response information for one or more UEs, the random access preamble identifier may be included in order to indicate the UE for which the included UL Grant, temporary C-RNTI, and TAC are valid. The random access preamble identifier may be an identifier of the random access preamble received by the base station. The TAC may be included as information for the UE to adjust uplink synchronization. The random access response may be indicated by a random access identifier on the PDCCH, i.e., a random access-radio network temporary identifier (RA-RNTI).

Upon receiving a valid random access response, the UE processes information included in the random access response and performs scheduled transmission to the base station. For example, the UE applies the TAC and stores the temporary C-RNTI. In addition, the UE transmits, to the base station, data stored in the buffer of the UE or newly generated data using the UL Grant. In this case, information for identifying the UE must be included in the data.

Lastly, the UE receives a downlink message to resolve the contention.

### <NR CORESET>

The downlink control channel in NR is transmitted in a CORESET (control resource set) having a length of 1 to 3 symbols, and the downlink control channel transmits uplink/downlink scheduling information, an SFI (slot format index), TPC (transmit power control) information, and the like.

As described above, NR has introduced the concept of CORESET in order to secure the flexibility of a system. The CORESET (control resource set) refers to a time-frequency resource for a downlink control signal. The UE may decode a control channel candidate using one or more search spaces in the CORESET time-frequency resource. CORE SET-specific QCL (quasi-colocation) assumption is configured and is used for the purpose of providing information on the characteristics of analogue beam directions, as well as delay spread, Doppler spread, Doppler shift, and an average delay, which are the characteristics assumed by existing QCL.

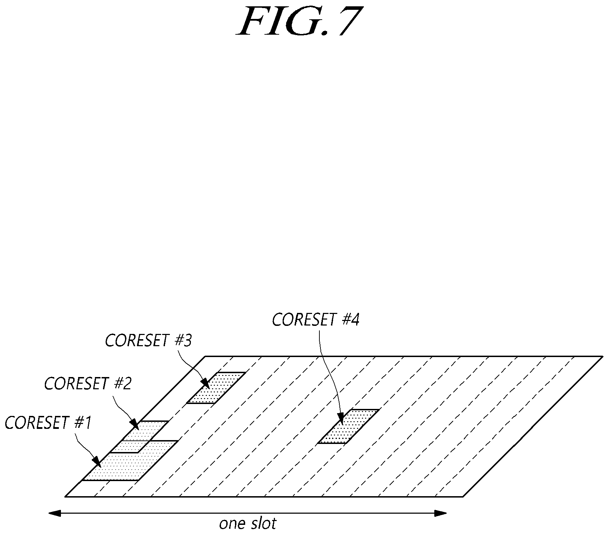

FIG. 7 illustrates CORESET.

Referring to FIG. 7, CORESETs may exist in various forms within a carrier bandwidth in a single slot, and the CORESET may include a maximum of 3 OFDM symbols in the time domain. In addition, the CORESET is defined as a multiple of six resource blocks up to the carrier bandwidth in the frequency domain.

A first CORESET, as a portion of the initial bandwidth part, is designated (e.g., instructed, assigned) through an MIB in order to receive additional configuration information and system information from a network. After establishing a connection with the base station, the UE may receive and configure one or more pieces of CORESET information through RRC signaling.

In this specification, a frequency, a frame, a subframe, a resource, a resource block, a region, a band, a subband, a control channel, a data channel, a synchronization signal, various reference signals, various signals, or various messages in relation to NR (New Radio) may be interpreted as meanings used at present or in the past or as various meanings to be used in the future.

The disclosure relates to a method and device for processing packet data for a specific application service such as XR/media in a mobile communication network. For example, the disclosure relates to a technique of dividing and processing a group of packets or packet data unit (PDU) sets.

Packets for a specific application service may have the attribute of mutual dependency. For example, packets within one frame may be dependent on each other. The application may require all of the packets to decode a corresponding frame. The loss of one packet may, although other correlated packets are successfully transmitted, render the corresponding packets useless. For example, requirements may be imposed on XR applications in terms of application data units (ADUs)/media units rather than single packets/PDUs. Packets even at different positions in different frame types (I/P frame) or group of picture (GoP), although they are in the same video stream, may have different contributions to user experience. Accordingly, layered QoS handling in the video stream may loosen requirements and lead to higher efficiency.

If additional information from the higher/application layer may be utilized by the running service/application, it may be useful for making it easier to select a radio parameter. However, there is provided no specific method provided for the UE, base station, or core network to effectively recognize and process the characteristics of XR application traffic.

As such, typical mobile communication technology does not provide a specific method for enabling a terminal, base station, or core network to effectively recognize and process XR application traffic.

To address these issues, the present disclosure introduces a configuration method and device for providing packet data processing that considers application traffic characteristics using information provided from the higher/application layer in a wireless network.

In the disclosure, a method is described based on 5GS/NR technology. However, embodiments are not limited thereto. This is for convenience of description, and the present embodiments may be applied to any system/radio access technology (e.g., LTE, 6G). Embodiments described in the disclosure include information elements specified in the NR/5GS standards (e.g., TS 38.321 as a MAC standard, TS 38.331 as an NR RRC standard, TS 23.501 as a 5G system structure standard, TS 23.502 as a 5G system procedure standard, etc.) and the content of operations. Although the disclosure does not contain the details of the UE operation related to the definitions for the corresponding information elements, the corresponding content set forth in the standards which are known art may be incorporated into the present embodiments.

Further, in the disclosure, an XR or CG application is described as an example of the application. However, this is for convenience of description and ease of understanding and, without limitations, the present embodiments may be applied to data processing at a specific application level.

Any function described below is defined as an individual-UE capability (UE radio capability or UE core network capability) and may be transmitted by the UE to the base station/core network entity (e.g. AMF/SMF) through corresponding signaling. Alternatively, arbitrary functions may be combined/merged to be defined as the corresponding UE capability, and transmitted to the base station/core network entity through corresponding signaling by the UE.

The base station may transmit/indicate information indicating allowing/supporting/configuring the corresponding function/function combination for any function or any function combination, described below, to the UE through an RRC message. For example, it may be indicated to the UE before or simultaneously with configuring/applying the corresponding function/function combination. The RRC message may be broadcast through system information. Or, it may be indicated to the UE through a dedicated RRC message.

For convenience of description, a unit divided by the application/application layer, or a unit divided within the application, a unit having a correlation between data/stream/packets in one application, a unit having dependency between data/stream/packets in one application, a unit divided with different traffic characteristics/streams within one flow, a unit divided with different traffic characteristics/streams within one PDU session, a unit divided based on any information/field/metadata included/used/added in the application, or PDUs carrying the payload of one unit information generated at the application level is denoted as a PDU Set. This is only for convenience of description. The term "PDU set" may be replaced with any other term such as an application data unit (ADU), an application unit, a media unit (MU), an application packet data unit, a group of picture (GoP) unit, a traffic type (e.g., XR viewer pose information unit, tactile information, video, audio, degree of freedom) specific unit, frame type, stream type, or the like.

In an aspect, the present disclosure may provide a method for processing an application data flow by a user equipment (UE). The method may include receiving a higher layer message including radio resource configuration information associated with at least one of assistance information for an application traffic characteristic and PDU set information, applying the radio resource configuration information to the UE, and transmitting/receiving user plane data generated in an application layer using the radio resource configuration information. All the PDUs in one PDU Set are required to use the corresponding unit information by the application layer. (A PDU Set is composed of one or more PDUs carrying the payload of one unit of information generated at the application level (e.g., a frame or video slice for XRM Services), which have the same importance requirement at application layer. All PDUs in a PDU Set are needed by the application layer to use the corresponding unit of information.) For example, a PDU set may be understood as a concept similar to a video slice. The video slice is a region spatially divided in one video frame and is encoded by being separated from other regions in the same frame.

The functions described below may be performed individually and independently. The functions described below may be arbitrarily combined or merged, and it is obvious that they are also included in the scope of present embodiments. For example, one or more functions may be applied simultaneously.

Any information about the XR application described below may be traffic characteristic information (e.g., any statistics/statistical quantity such as expected value/average, deviation, standard deviation, etc.) statistically/empirically obtained/calculated/derived by the UE/network. Therefore, any information included herein may indicate one or more of the average (expected value)/minimum/maximum/standard deviation values. For example, if the information 'update rate' is included, it may mean an average (expected value)/minimum/maximum/standard deviation update rate. This is for convenience of description, and all of the information in the disclosure may be used as statistical information. Alternatively, it may be information preconfigured in the UE/network or provisioned through OAM/application server/application function/UDM.

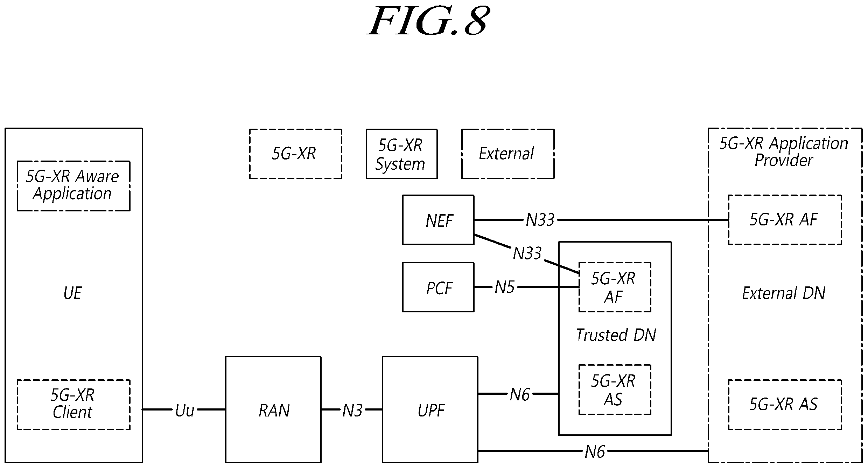

FIG. 8 is a view illustrating an example of a structure for implementing a 5G-XR function in a 5G system.

For convenience of description, the embodiments in the disclosure are described based on FIG. 8. However, the embodiments are not limited thereto. The embodiments may be applied to any system/radio access technology (e.g., LTE or 6G).

Referring to FIG. 8, the 5G-XR AF indicates an application function for a 5G-XR service. The 5G-XR AS indicates an application server for a 5G-XR service. The 5G-XR client indicates an internal function of a UE for a 5G-XR service. In the UE, the XR client may indicate a transceiver of an XR session accessed through APIs or the like by an XR application. The XR client may perform communicate or signaling with the 5G-XR AF to configure/control/support an XR session (or delivery of the XR session). The XR client may access XR data and communicate with the 5G-XR AS to process corresponding data. The 5G-XR AF provides various control functions for processing the XR session on the UE. The 5G-XR AF may perform signaling with PCF/NEF for QoS control. The 5G-XR AS indicates an application server that hosts 5G XR media and media functions.

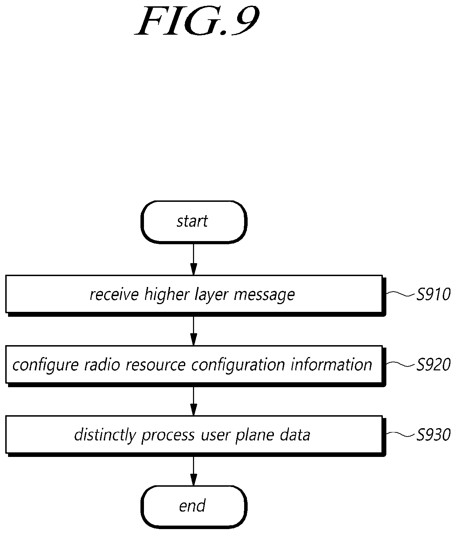

FIG. 9 is a flowchart illustrating operations of a UE according to an embodiment.

Referring to FIG. 9, in a method for processing an application data flow, a UE may perform the step of receiving a higher layer message including radio resource configuration information that is configured to transmit/receive specific application data (S910).

According to an embodiment, the radio resource configuration information may include protocol data unit (PDU) Set information that includes at least one of a PDU Set sequence number, PDU Set end PDU indication information, and PDU Set importance information. Further, the radio resource configuration information may include at least one of assistance information for an application traffic characteristic and PDU set information.

According to an embodiment, the application data flow (or application data) may be a PDU set of specific application data that has a high correlation between data flows such as XR or CG. The UE may receive, from the base station, radio resource configuration information associated with assistance information that may help address the characteristics of the corresponding application traffic. According to another embodiment, the UE may receive radio resource configuration information associated with the PDU set information from the base station. According to further another embodiment, the UE may receive the radio resource configuration information associated with the assistance information and the PDU Set information from the base station.

According to an embodiment, the assistance information may include at least one of uplink or downlink period information about the application data flow and jitter information associated with the period information. As described above, the application data flow may cause uplink or downlink at a non-integer period according to the traffic characteristics of the corresponding application. Further, the application data flow may cause uplink or downlink transmission/reception with a certain level of jitter. Accordingly, the period information may be set to a non-integer value. Alternatively, the period information may be set to an integer value. By using the assistance information, the UE may perform effective application traffic processing by applying transmission/reception parameters considering the characteristics of the corresponding application data flow.

According to another embodiment, the PDU set information may include at least one of a PDU Set sequence number, PDU Set end PDU indication information, and PDU Set importance information. For example, the PDU set information may include a PDU set sequence number used in the corresponding application. Alternatively, the PDU set information may include indication information that indicates the last PDU of the PDU set where the corresponding application is terminated. Alternatively, the PDU set information may include importance information applied to the PDU set. One PDU set may be set to have the same importance.

Meanwhile, the higher layer message may be an RRC message. For example, the higher layer message may include an N1 session management (SM) container that includes a PDU Set QoS parameter. In other words, the UE may identify the N1 SM container included in the higher layer message and apply it to the corresponding application data flow processing using the PDU Set QoS parameter included in the N1 SM container. Alternatively, the higher layer message may be a message broadcast by the base station.

The UE may perform the step of configuring the radio resource configuration information (S920).

According to an embodiment, the UE may store the received radio resource configuration information in the UE. Alternatively, the UE may store the received radio resource configuration information as the parameter value of the UE and use it when needed later.

According to an embodiment, the UE may configure a radio link control (RLC) entity based on at least one piece of information included in PDU Set information.

According to another embodiment, the radio resource configuration information may include one or more of the following: DRX configuration information supporting a non-integer value based on assistance information or data radio bearer configuration information associated with one or more logical channel configurations based on PDU Set information.

According to another embodiment, the UE may configure the DRX parameter by storing or applying the DRX configuration information supporting the non-integer value included in the wireless resource configuration information to the UE. Accordingly, a UE DRX operation suitable for the application data flow transmitted and received at a period set to the non-integer value may be performed.

According to another embodiment, the UE may configure the DRB of the UE using the DRB configuration information associated with the logical channel configuration included in the radio resource configuration information. The corresponding logical channel configuration is configured based on PDU Set information, and a logical channel and a DRB suitable for the application data flow may be configured in the UE.

The UE may perform the step of distinctly processing user plane data of application data based on the radio resource configuration information (S930).

According to an embodiment, the UE may apply the radio resource configuration information and transmit and receive user plane data generated in the corresponding application layer. In this case, the UE may process the user plane data of the corresponding application data distinctly from other normal data based on the radio resource configuration information.

For example, the UE may process the user plane data generated in the corresponding application layer using the data radio bearer configured using the radio resource configuration information. As another example, the UE may control the DRX operation of the UE according to the uplink or downlink key period generated as a non-integer value by applying the DRX parameter configured using the radio resource configuration information to the UE.

Meanwhile, the above-described protocol data unit (PDU) of user plane data for a specific application may be configured to include one of the PDU Set sequence number, PDU Set end PDU indication information, and PDU Set importance. For example, one of the PDU Set sequence number, PDU Set end PDU indication information, and PDU Set importance may be included in the service data adaptation protocol (SDAP) header or packet data convergence protocol (PDCP) header of the PDU. In other words, the SDAP header may include one or more of information constituting the corresponding PDU Set information. And/or the PDCP header may include one or more of information constituting the corresponding PDU Set information. Thus, the corresponding PDU Set information may be distinctly processed.

For example, the UE may discard all protocol data units (PDUs) or service data units (SDUs) associated with at least one piece of information included in the PDU Set information in the packet data convergence protocol (PDCP) entity or radio link control (RLC) entity. In other words, all associated PDU Sets may be discarded.

The protocol data unit (PDU) or the service data unit (SDU) may be discarded based on the timer distinctly configured per PDU Set information. The corresponding timer may be included in the radio resource configuration information and configured in the UE. Further, the corresponding timer may be configured and operated individually in association for each PDU Set. Meanwhile, if the timer expires, the UE may instruct the lower layer to discard the protocol data unit (PDU) or the service data unit (SDU). For example, if the timer expires, the PDCP entity may instruct the RLC entity to discard the PDU or SDU associated with the corresponding timer.

Through the above operations, the UE may enhance dynamic processing performance for various transmission/reception data generated in a specific application. Further, the UE may process a service requiring high accuracy and responsiveness, such as XR or CG, without any problems.

A more specific procedure and related information will be described in detail for each embodiment later.

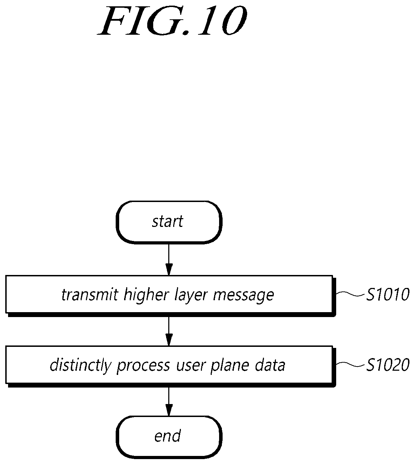

FIG. 10 is a flowchart for describing operations of a base station according to an embodiment.

Referring to FIG. 10, in a method for processing an application data flow, a base station according to the present embodiments may perform the step of transmitting, to a UE, a higher layer message including radio resource configuration information that is configured to transmit/receive specific application data (S1010).

According to an embodiment, the radio resource configuration information may include protocol data unit (PDU) Set information including at least one of a PDU Set sequence number, PDU Set end PDU indication information, and PDU Set importance information. Further, the radio resource configuration information may include at least one of assistance information for an application traffic characteristic and PDU set information. For example, the application data flow (or application data) may be a PDU set of specific application data that has a high correlation between data flows such as XR or CG. The UE may receive, from the base station, radio resource configuration information associated with assistance information that may help address the characteristics of the corresponding application traffic. Alternatively, the UE may receive radio resource configuration information associated with the PDU set information from the base station. In another scenario, the UE may receive the radio resource configuration information associated with the assistance information and the PDU Set information from the base station.

According to an embodiment, the assistance information may include at least one of uplink or downlink period information about the application data flow and jitter information associated with the period information. As described above, the application data flow may cause uplink or downlink transmission at a non-integer period according to the traffic characteristics of the corresponding application. Further, the application data flow may cause uplink or downlink transmission/reception with a certain level of jitter. Accordingly, the period information may be set to a non-integer value. Alternatively, the period information may be set to an integer value. By using the assistance information, the UE may perform effective application traffic processing by applying transmission/reception parameters that considers the characteristics of the corresponding application data flow.

According to another embodiment, the PDU set information may include at least one of a PDU Set sequence number, PDU Set end PDU indication information, and PDU Set importance information. For example, the PDU set information may include a PDU set sequence number used in the corresponding application. Alternatively, the PDU set information may include indication information that indicadtes the last PDU of the PDU set where the corresponding application is terminated. Alternatively, the PDU set information may include importance information applied to the PDU set. One PDU set may be set to have the same importance.

The higher layer message may be an RRC message. For example, the higher layer message may include an N1 session management (SM) container including a PDU Set QoS parameter. Alternatively, the higher layer message may be a message broadcast by the base station.

The base station may perform the step of distinctly processing user plane data of application data based on the radio resource configuration information (S 1020).

To distinctly process the user plane data of the specific application data, it is required to recognize the protocol data unit (PDU) of the corresponding user plane data.

To that end, the PDU of user plane data for a specific application may be configured to include one or more information of the PDU Set sequence number, PDU Set end PDU indication information, and PDU Set importance. For example, one or more information of the PDU Set sequence number, PDU Set end PDU indication information, and PDU Set importance may be included in the service data adaptation protocol (SDAP) header or packet data convergence protocol (PDCP) header of the PDU. In other words, the SDAP header may include one or more information constituting the corresponding PDU Set information. And/or the PDCP header may include one or more information constituting the corresponding PDU Set information. Thus, the corresponding PDU Set information may be distinctly processed.

The protocol data unit (PDU) or the service data unit (SDU) may be discarded based on the timer distinctly configured per PDU Set information. The corresponding timer may be included in the radio resource configuration information. Further, the corresponding timer may be configured and operated in association for each PDU Set. Meanwhile, if the timer expires, the lower layer may be instructed to discard the protocol data unit (PDU) or the service data unit (SDU). For example, if the timer expires, the PDCP entity may instruct the RLC entity to discard the PDU or SDU associated with the corresponding timer.

Through the above operations, the base station may enhance dynamic processing performance for various transmission/reception data generated in a specific application. Further, the base station may process a service requiring high accuracy and responsiveness, such as XR or CG, without any problems.

Hereinafter, a more specific procedure and related information will be described in detail for each embodiment. The individual embodiments described below may be performed in any combination of all or some thereof. In the following description, an XR/media application service is presented as an example of the specific application service. This is for convenience of description, and the embodiments are not limited thereto.

### Define relationship between PDU Session and PDU Set

A PDU session indicates an association between the UE and a Data Network that provides a PDU connectivity service. For one UE (or for each UE), one XR/media service may use a single PDU session.

For example, the UE may share an XR/media application service supporting/providing a PDU Set (or PDU Set capability) and another application service not supporting/providing a PDU Set through one PDU session. It may be preferable to transfer tactile and/or multi-modal data (e.g., audio, video, haptic data related to a specific time) related to one application to the user/UE at a similar time through adjusted processing. A mobile communication system (e.g., UE, base station, or 5GS (e.g., SMF or UPF)) may group and discern XR/media application service data flows supporting/providing a PDU set (or PDU set capability) for the corresponding PDU session. For example, it may be discerned through information that identifies the corresponding XR/media application service data flows (QoS-flows/PDU-Sets) group. Alternatively, for an XR/media application service data flow supporting/providing a PDU set (or PDU Set capability), it may be discerned through information (e.g., PDU-Set-ID) that identifies the corresponding PDU set.

As another example, the UE may distinctly configure a PDU session supporting an XR/media application service that supports and provides a PDU Set (or PDU Set capability) and a PDU session providing another application service that does not support or provide a PDU Set through one PDU session. A service may be provided through a dedicated PDU session for one XR/media application service. In this case, since QoS-flow/service data flow for another application service is not shared, processing that considers the PDU-Set level parameter may be provided/supported for all QoS-flow/service dataflows included in the corresponding PDU Session even without separately including information for QoS-flow/PDU-Set grouping for the corresponding XR/media application service. In the corresponding procedure/signaling (e.g., PDU session setup/modification procedure between the UE and the core network node (e.g., AMF/SMF)), the corresponding PDU session may be discerned through indication information for discerning/identifying/indicating the PDU session supporting/providing the PDU-Set.

### PDU Set distinct processing in NAS

In the case of downlink, the UPF (UE in the case of uplink) may discern PDU-Set using one or more pieces of information included in an arbitrary header (e.g., payload/RTP/SRTP/RTCP/TCP/UDP/IP header) encapsulating a corresponding packet/payload/PDU for one data packet/payload/application PDU. For example, the RTP header may include information such as a sequence number, a timestamp, a marker (M) bit, and the like, and the corresponding information may be used to identify the packet belonging to one PDU-Set. As another example, the RTP extension header may include information about the type of payload data (e.g., an RTP payload network application layer unit type field), and the corresponding information may be used to determine the importance of the corresponding packet. Alternatively, the UPF may discern PDU-Set using metadata generated by the AS. Packet filter information (e.g., PDU-Set description information through one or more pieces of information included in an arbitrary header) for discerning the PDU-Set may be transferred to a corresponding entity/node (e.g., PCF/SMF/PFDF/UDM) by the application function AF (through an NEF if there is a Network Exposure Function (NEF)).

In the case of downlink, the UPF (in the case of uplink, the UE) may add PDU-Set-related information for the corresponding PDUs and transmit the same to the base station (RAN). The base station may use the received corresponding information to allocate radio resources. The base station may discern the corresponding PDU-Set and transmit data to the UPF using the received corresponding information. The PDU-Set-related information transmitted by the UPF/UE to the base station may include one or more of the following information.
- PDU Set identifier: Information for identifying the PDU-Set
- PDU-Set sequence number/mark
- PDU-Set size: Information for identifying/indicating the last SDU/PDU of one PDU-Set
- Information for indicating that it is the last PDU in the PDU-Set
- PDU-Set importance/priority indication information: Information for indicating the importance/priority value of the corresponding PDU-Set

The one or more pieces of information (PDU-Set-related information) described above may be included only in the first PDU of the corresponding PDU-Set. And/or the above-described one or more pieces of information may be included in the last PDU of the corresponding PDU-Set. Alternatively, the above-described one or more pieces of information may be included in all the PDUs of the corresponding PDU-Set. As an example, one PDU-Set may be discerned by setting/adding the same PDU sequence number to all the packets belonging to the corresponding PDU-Set. As another example, one PDU-Set may be discerned by setting/adding information for indicating that the last packet belonging to the corresponding PDU-Set is the last PDU in the corresponding PDU-Set.

The one or more pieces of information (PDU-Set-related information) described above may be discerned by being marked through an arbitrary field on the GTP-U extension header in the base station/UPF.

One or more pieces of PDU-Set-related information (e.g., PDU-Set sequence number) may have an n-bit value (where n is a natural number larger than 2, e.g., 2, 3, 4... ). The corresponding value may start from 0 (or 1) and increase by 1, and may be set to circulate if reaching the largest value through a modulo/modular operation. For example, when the corresponding n has 2 bits, it may have 4 values of 0, 1, 2, and 3, and may be circulated as 0, 1, 2, 3, 0, 1, 2, 3, 0, 1, 2, 3... through mod 4 operation.

The UE capable of PDU-Set processing may request the use of the corresponding function during a NAS procedure (e.g., attach procedure, service request procedure, PDU session establish/modify) and may receive authorization/permission for the same. Alternatively, the corresponding UE may receive a rule/policy for PDU-Set processing for a PDU session supporting PDU-Set processing during a PDU session setup/modification procedure. For example, the UE may include a rule/policy for DU-Set processing in the N1 session management (SM) container and receive the same. The rule/policy may include a QoS rule for the PDU-Set and a QoS-flow/PDU-Set level QoS parameter for the QoS-flow/PDU-Set associated with the corresponding QoS rule.

The UE may process uplink data using the QoS rule and the PDU-Set level QoS parameter for the received PDU-Set. The PDU-Set level QoS parameter may include PDU-Set level QoS characteristics (one or more of PDU-Set level Resource type (Non-GBR, GBR, Delay-critical GBR), PDU-Set level Priority/importance, PDU-Set level Packet Delay Budget, PDU-Set level Packet Error Rate, PDU-Set level Averaging window, PDU-Set level Maximum Data Burst Volume, PDU-Set discard time). Alternatively, the PDU-Set level QoS parameter may be a scalar value (e.g., 5QI or QCI) used to reference PDU-Set level QoS characteristics. The base station may receive the QoS rule and the PDU-Set level QoS parameter for the corresponding PDU-Set from the core network node (e.g., AMF/SMF) on the relevant NAS processor.

### DRB mapping of QoS flow and PDU Set in SDAP sublayer

In the related art, the service data adaptation protocol (SDAP) layer/sublayer provided a function of mapping QoS flows to DRBs. For example, mapping between one QoS flow and one DRB was supported for both uplink and downlink. The QoS flow ID (QFI) was marked on the SDAP header in both uplink and downlink.

In order to support PDU-Set level QoS processing for (XR/media) applications, it may be necessary to enhance SDAP (or PDCP higher adaptation protocol) functions.

For example, one PDU-Set may be mapped to one DRB and processed. Information (e.g., PDU-Set-ID) for identifying the PDU-Set may be marked/included in the SDAP header in both uplink and downlink. The base station may transfer the corresponding PDU-Session identification information and PDU-Set(s) information to be added/released on the SDAP configuration information (sdap-config) through the RRC message.

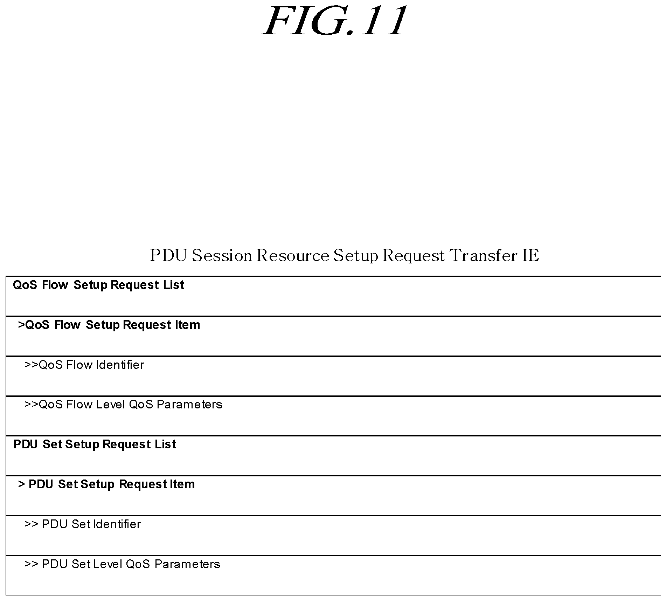

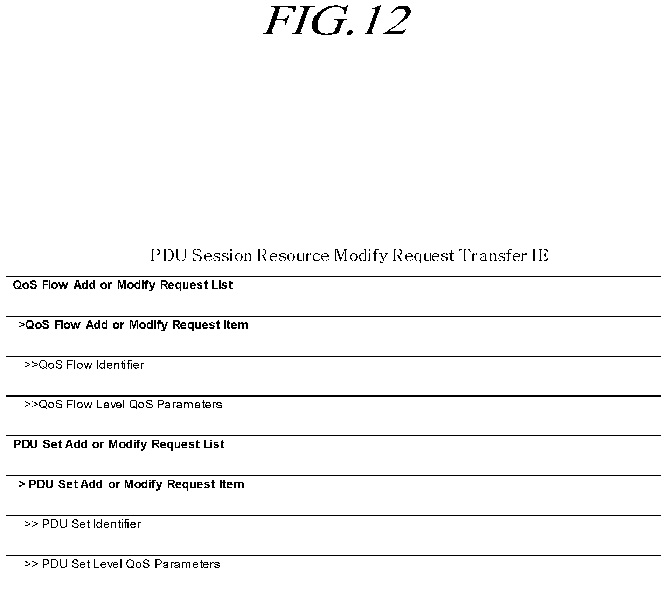

FIG. 11 is a view exemplarily illustrating a PDU session resource setup request transfer information element according to an embodiment. FIG. 12 is a view exemplarily illustrating a PDU session resource modify request transfer information element according to an embodiment.

Referring to FIG. 11 and FIG. 12, the PDU-Set setup/add/modification information included in the PDU session resource setup/modification request message included in the NGAP interface between the core network node (e.g., AMF/SMF) and the base station may be used independently of the QoS flow setup/add/modification information. Alternatively, the PDU-Set setup/addition/modification information included in the PDU Session Resource Setup/modification request message included in the NGAP interface between the core network node (e.g., AMF/SMF) and the base station may be used as a parameter of the same level as the QoS flow setup/addition/modification information as shown in FIG. 11 and FIG. 12.

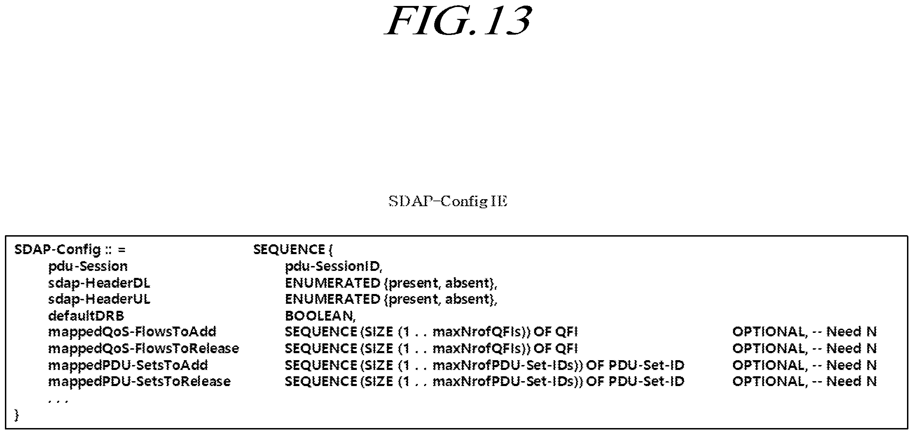

FIG. 13 is a view exemplarily illustrating an SDAP-Config information element according to an embodiment.

Referring to FIG. 13, as another example, the SDAP configuration information (sdap-config) included in the RRC message may indicate the information for indicating the QFIs list of the uplink QoS flows of the PDU session to be additionally mapped to the DRB independently of the information for indicating the PDU-Set-IDs list of the uplink PDU-Sets of the PDU session to be additionally mapped to the DRB. Alternatively, the SDAP configuration information (sdap-config) included in the RRC message may indicate, as shown in FIG. 13, information for indicating a QFIs list of uplink QoS flows of a PDU session to be additionally mapped to the corresponding DRB as a parameter of a level equal to the information for indicating the PDU-Set-IDs list of uplink PDU-Sets of the PDU session to be additionally mapped to the DRB. The corresponding DRB may be mapped/associated by sharing QoS flow(s) and/or PDU-Set(s). Alternatively, the corresponding DRB may be mapped/associated exclusively to QoS flow(s) or PDU-Set(s). The corresponding uplink/downlink SDAP header may be applied including a QoS flow ID and/or a PDU-Set ID according to the QoS flow(s) and/or the PDU-Set(s).

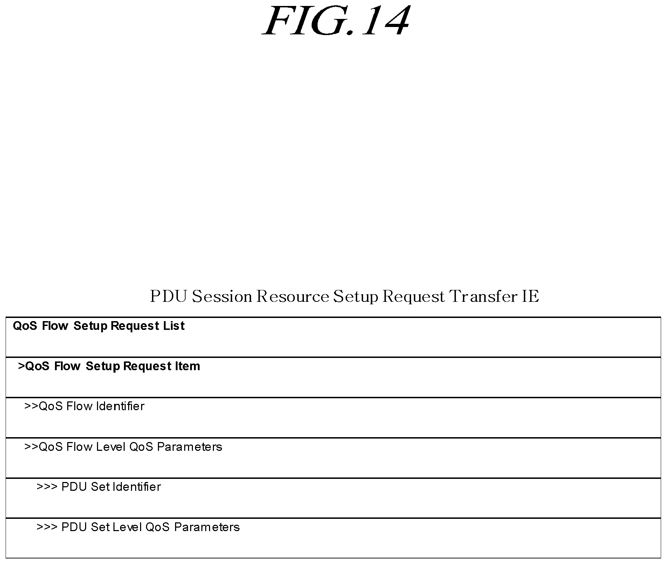

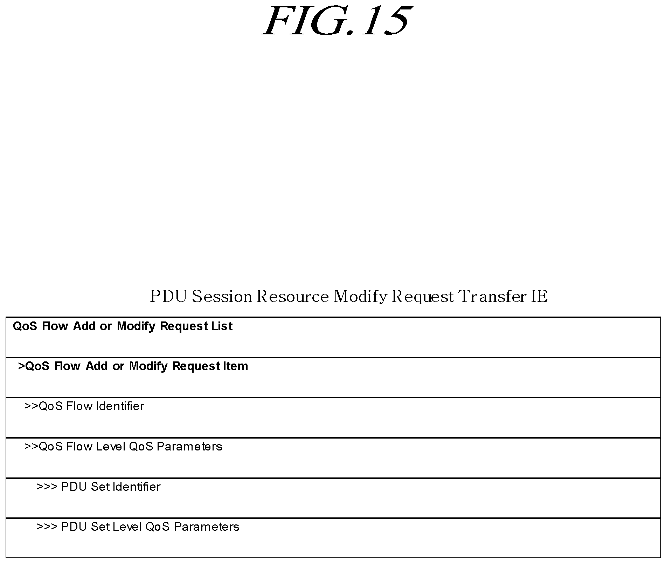

FIG. 14 is a view exemplarily illustrating a PDU session resource setup request transfer information element according to another embodiment. FIG. 15 is a view exemplarily illustrating a PDU session resource modify request transfer information element according to another embodiment.

Referring to FIG. 14 and FIG. 15, as another example, the PDU-Set setup/add/modification information included in the PDU Session Resource Setup/modification request message included in the NGAP interface between the core network node (e.g., AMF/SMF) and the base station may be used as a lower level parameter for the QoS flow setup/add/modification information.

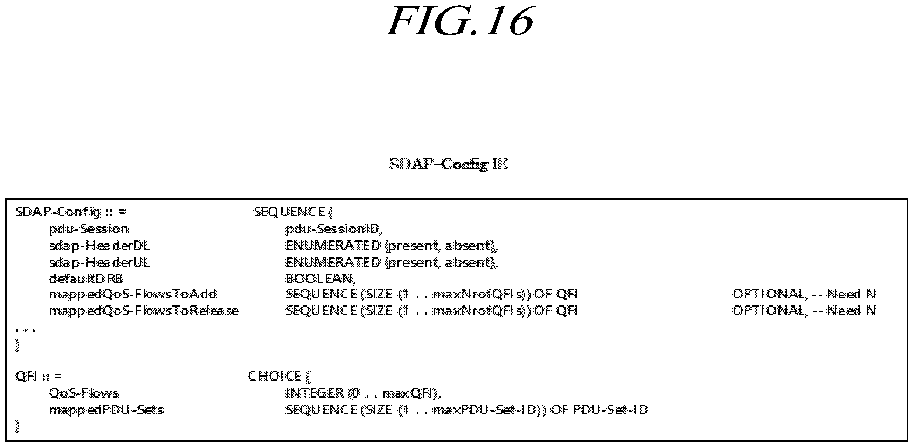

FIG. 16 is a view exemplarily illustrating an SDAP-Config information element according to another embodiment.

Referring to FIG. 16, as another example, in the SDAP configuration information (sdap-config) included in the RRC message, the PDU-Set-IDs of the uplink PDU-Sets of the PDU session to be additionally mapped to the corresponding DRB may be indicated as a lower level parameter to the information for indicating the QFIs of the uplink QoS-Flows of the PDU session to be additionally mapped to the DRB. The corresponding uplink/downlink SDAP header may be applied including a QoS flow ID and/or a PDU-Set ID according to the QoS flow(s) and/or the PDU-Set(s).

As another example, if there is no PDU Set to DRB mapping rule indicated/configured/stored for the corresponding PDU-Set, the corresponding PDU-Set may be mapped to the default DRB. Otherwise, the PDU(s)/SDAP-SDU belonging to the PDU-Set may be mapped to the corresponding DRB according to the PDU Set to DRB mapping rule for mapping the indicated/configured/stored PDU-Set to the DRB.

As another example, for the PDU-Set, the corresponding SDAP SDU may not be mapped to the default DRB. The PDU(s)/SDAP-SDU belonging to the PDU-Set may be mapped to the corresponding DRB according to the PDU Set to DRB mapping rule that always maps the indicated/configured/stored PDU-Set to the DRB.

As another example, if there is no indicated/configured/stored DRB mapping rule for the corresponding PDU-Set,
>>If there is a QoS flow to DRB mapping rule indicated/configured/stored for the QoS flow to which the corresponding PDU-Set belongs for the corresponding PDU-Set, the PDU(s)/SDAP-SDU belonging to the corresponding PDU-Set may be mapped to the corresponding DRB according to the PDU Set to DRB mapping rule that maps the indicated/configured/stored QoS flow to the DRB.
>>Otherwise (or if there is no QoS flow to DRB mapping rule indicated/configured/stored for QoS flow to which the corresponding PDU-Set belongs for the corresponding PDU-Set)
>>>The corresponding PDU-Set (PDU(s)/SDAP-SDU(s) belonging to the corresponding PDU-Set) may be mapped to the default DRB.
>>>This may be indicated by the higher layer (e.g., RRC/NAS). The higher layer of the UE may indicate this to the base station/core network node (e.g., AMF/SMF) through signaling (RRC/NAS signaling).

As another example, the default DRB indication information (defalutDRB) indicates information for indicating whether it is the default DRB for this PDU session among all the configured instances of the SDAP having the same value (e.g., PDU-SessionID) as the corresponding PDU-Session. If the corresponding DRB is mapped only to (specific) PDU-Set (through SDAP-Config), the corresponding DRB may not be configured as the default DRB. Accordingly, the DRB configured/indicated for (specific) PDU-Set(s) may not be used as the default DRB. As another example, the default DRB may be used among DRBs mapped to QoS-flow (mappingable to QoS-flow).

As another example, the base station may add information for indicating the default DRB for PDU-Set to the RRC message and indicate it to the UE. The corresponding information may be defined and indicated as information discerned from the default DRB indication information (defalutDRB) described above.

### Distinct processing of PDU Set in SDAP sublayer

When one or more PDU-Set(s) are mapped to one DRB and processed, there may be provided a method for distinctly processing the same on an SDAP in order to support processing distinct for each PDU-Set (e.g., for each PDU-Set-ID, for each PDU-Set sequence number having the same PDU-Set-ID, or for each PDU-Set importance/priority having the same PDU-Set-ID) in any L2 sublayer (e.g., SDAP/PDCP/RLC/MAC).

For convenience of description, a method of distinctly processing the PDU-Set in the SDAP sublayer is described below. However, this is only for convenience of description, and it is obvious that the application of the same method as the SDAP sublayer in the PDCP/RLC/MAC sublayer is also included in the scope of the present invention.

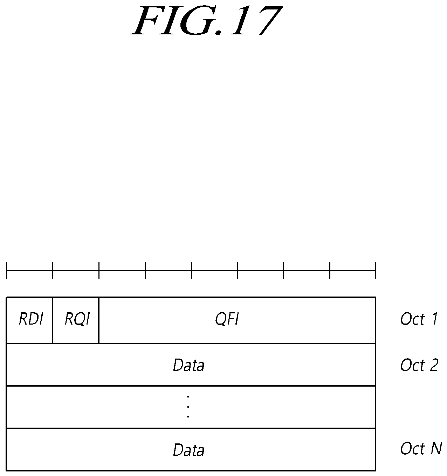

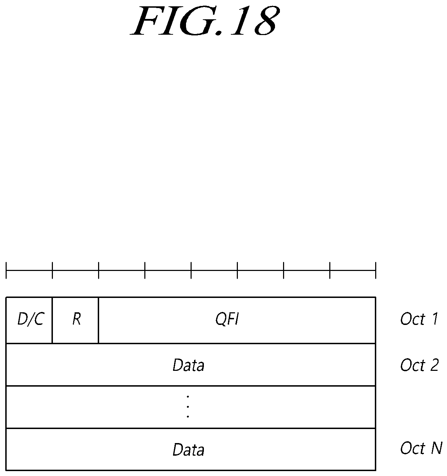

FIG. 17 is a view illustrating a DL SDAP data PDU format with SDAP header according to an embodiment. FIG. 18 is a view illustrating a UL SDAP data PDU format with SDAP header according to an embodiment.

FIG. 17 and FIG. 18 show the SDAP Data PDU format in the related art.

For example, the uplink/downlink SDAP data PDU may be constructed by including the above-described PDU-Set-related information (e.g., one or more pieces of information among the PDU-Set identifier, PDU-Set sequence number, PDU-Set size, information for identifying the last PDU of the PDU-Set, information for indicating that it is the last PDU in the PDU-Set, and PDU-Set importance/priority indication information) in the SDAP header.

For example, in order to use the SDAP header including one or more pieces of information among the PDU-Set-related information discerned from the related art, the base station may include information that indicates the use/application/presence of the uplink/downlink SDAP header supporting the PDU-Set (in the SDAP configuration information) through RRC signaling and indicate the same to the UE. The corresponding information may indicate the use of the corresponding SDAP header through information discerned from information for indicating whether there is an SDAP header for uplink/downlink data (sdap-HeaderUL/sdap-HeaderDL) on the DRB according to the prior art.

As another example, the use of the SDAP header supporting the PDU-Set may be indicated through information for indicating a dedicated PDU-Session supporting the PDU-Set or a dedicated SDAP-ConFIG. The use of the corresponding SDAP header may be indicated through information indicating whether there is an SDAP header for uplink/downlink data (sdap-HeaderUL/sdap-HeaderDL) on the DRB according to the-related art. Alternatively, the use of the corresponding SDAP header may be indicated through information discerned from information indicating whether there is an SDAP header for uplink/downlink data (sdap-HeaderUL/sdap-HeaderDL) on the corresponding DRB according to the prior art.

As another example, an SDAP entity for a PDU session supporting a PDU-Set may be further configured/set. For example, the SDAP entity for the QoS flow(s) included in the corresponding PDU session and the SDAP entity for the PDU-Set(s) included in the corresponding PDU session may be distinctly configured/set. Alternatively, a dedicated SDAP entity for PDU-Set(s) included in the corresponding PDU session may be configured/set.

As another example, for the UE supporting the PDU-Set and/or when the base station receives the PDU-Set processing request from the UE/core network node (e.g., AMF/SMF), the base station may notify the UE using the above-described PDU-Set-related information (e.g., one or more pieces of information among the PDU-Set identifier, PDU-Set sequence number, PDU-Set size, information for identifying that it is the last PDU of the PDU-Set, information for indicating that it is the last PDU in the PDU-Set, and PDU-Set importance/priority indication information).

As another example, PDU-Set may be distinctly processed through SDAP control PDU.

For example, in order to indicate/notify the use/use termination/switching/presence/absence of the SDAP header including one or more pieces of information among the PDU-Set-related information from the related art, the base station may send SDAP control PDU signaling to the UE. As another example, in order to indicate/notify the use/use termination/switching/presence/absence of any L2 (PDCP/RLC/MAC) header including one or more pieces of information among the PDU-Set-related information discerned from the related art, the base station may send the corresponding L2-control-PDU/MAC-CE signaling to the UE. The control PDU/MAC-CE may include one or more pieces of information among the PDU-Set-related information described above. The control PDU/MAC-CE may include indication information for discernment of one or more pieces of information among the header use/use start/use termination/switching/presence/absence.

As another example, the PDU-Set may be mapped to the DRB through the end-marker control PDU and used. When the RRC configures a rule for mapping the uplink PDU-Set to the DRB, the SDAP entity may operate as follows.
>If one or more of the following conditions are met, one or more of the following operations may be performed.

Relevant Conditions: SDAP already configured, no rule to map the PDU-Set stored for the corresponding PDU-Set to the DRB, the default DRB for the corresponding PDU-Set or the default DRB for the QoS-flow belonging to the corresponding PDU-Set configured, and the last PDU/SDAP-SDU identified/detected in the corresponding PDU-Set.
>>Construct the above-described control PDU or the End-Marker Control PDU for the corresponding PDU-Set according to the prior art (TS.37.324 6.2.3).
>>Map the corresponding End-Marker Control PDU or the above-described control PDU to the default DRB for the corresponding PDU-Set or the default DRB for the QoS-flow belonging to the corresponding PDU-Set.
>>Submit the corresponding End-Marker Control PDU or the above-described control PDU to the lower layer.

>If one or more of the following conditions are met, one or more of the following operations may be performed.

Relevant Conditions: The rule for mapping the PDU-Set stored for the corresponding PDU-Set to the DRB is different from the rule for mapping the PDU-Set configured for the corresponding PDU-Set to the DRB, the rule for mapping the PDU-Set stored for the corresponding PDU-Set to the DRB is configured by the RRC, and the last PDU/SDAP-SDU is identified/detected in the corresponding PDU-Set.
>>Construct the above-described control PDU or the End-Marker Control PDU for the corresponding PDU-Set according to the prior art (TS.37.324 6.2.3).
>>Map the corresponding End-Marker Control PDU or the above-described control PDU to the DRB according to the rule for mapping the stored PDU-Set for the corresponding PDU-Set to the DRB.
>>Submit the corresponding End-Marker Control PDU or the above-described control PDU to the lower layer.

As another example, it may be indicated to stop the SDAP SDU mapping of the PDU-Set indicated by the PDU-Set ID included in the End-Marker Control PDU on the DRB to which the corresponding End-Marker Control PDU is transmitted, by including the PDU-Set ID in the QFI/field on the End-Marker Control PDU.

As another example, it may be indicated to stop the SDAP SDU mapping of the QoS flow including the corresponding PDU-Set using the PDU-Set ID included in the corresponding End-Marker Control PDU on the DRB where the corresponding End-Marker Control PDU is transmitted, by including the PDU-Set ID in the QFI/field on the End-Marker Control PDU.

### Distinct processing of PDU Set in PDCP sublayer

When one or more PDU-Set(s) are mapped to one DRB and processed, there may be provided a method for distinctly processing the same on a PDCP in order to support distinct processing for each PDU-Set (e.g., for each PDU-Set-ID, for each PDU-Set sequence number having the same PDU-Set-ID, or for each PDU-Set importance/priority having the same PDU-Set-ID) in any L2 sublayer (e.g., SDAP/PDCP/RLC/MAC).

For example, the PDCP entity may discard all/remaining PDCP SDUs (or PDUs) included in the corresponding PDU set at the PDU-Set level.

For example, the base station may configure a discard timer for a specific PDU set in the UE through RRC signaling. The corresponding discard timer may be based on a discardTimer for discarding one PDCP SDU according to the related art (TS 38.323 5.3).

As another example, when the discard timer for one PDCP SDU according to the related art or the discard timer for one PDU Set described above expires, the transmitting PDCP entity may discard the PDCP SDU along with the corresponding PDCP Data PDU. The transmitting PDCP entity may discard the PDCP SDU(s) together with all/remaining/all non-discarded/remaining non-discarded PDCP data PDU(s) included in the PDU-Set where the corresponding PDCP SDU is associated/mapped/included. The PDCP SDU(s) may be PDCP-Data-PDU(s)/PDCP-SDU(s) equal in one or more of the PDU-Set-related information (e.g., PDU-Set-ID, PDU-Set-sequence number, PDU-Set-importance/priority) together with all/remaining/all non-discarded/remaining non-discarded PDCP Data PDU(s) included in the above-described PDU-Set.

As another example, if the discard timer for one PDCP SDU according to the related art or the discard timer for one PDU Set described above expires, the transmitting PDCP entity may indicate the same to the lower layer. The RLC entity receiving the corresponding information (through any method) may reconfigure the corresponding RLC entity. Alternatively, the corresponding RLC entity may discard all/remaining/all non-discarded/remaining non-discarded RLC SDUs, RLC SDU segments, and RLC PDUs (which are included in the PDU-Set where the corresponding PDCP/RLC SDU is associated/mapped/included).

As another example, when the successful delivery of the corresponding PDUP SDU or PDU-Set is identified by the PDCP state report according to the related art or by the state report discerning the PDU-Set, the transmitting PDCP entity may discard the PDCP SDU along with the corresponding PDCP data PDU. The transmitting PDCP entity may discard the PDCP SDU(s) together with all/remaining/all non-discarded/remaining non-discarded PDCP data PDU(s) included in the PDU-Set where the corresponding PDCP SDU is associated/mapped/included. The PDCP SDU(s) may be PDCP-Data-PDU(s)/PDCP-SDU(s) equal in one or more of the PDU-Set-related information (e.g., PDU-Set-ID, PDU-Set-sequence number, PDU-Set-importance/priority) together with all/remaining/all non-discarded/remaining non-discarded PDCP Data PDU(s) included in the above-described PDU-Set.

As another example, the base station may receive assistance information for configuring a radio parameter for PDU-Set processing from a UE through RRC signaling or from a core network node (e.g., AMF/SMF) through NGAP signaling on a-related NAS processor. For example, the base station may receive one of the above-described PDU-Set level QoS parameters (e.g., PDU-Set level delay budget, PDU-Set discard time, and (expected) time for indicating the upper limit/lower limit/restriction required until all the PDUs included in the corresponding PDU set are discarded). The base station may set the PDU-Set discard timer (based on) the corresponding value and configure the same in the UE.

### PDCP Status report containing PDU-Set-related information

A state report may be defined and provided on any L2 sublayer for state reporting for the PDU-Set-related information. Hereinafter, for convenience of description, a method for defining and using state reporting on PDCP is described. However, this is for convenience of description, and it is obvious that providing the corresponding function on any sublayer among SDAP/PDCP/RLC/MAC is also included in the scope of the present invention.

For the DRB mapped to the PDU-Set configured by the higher layer (RRC), in order to transmit the PDCP state report to the uplink, the PDCP entity may trigger the PDCP state report including PDU-Set-related information in one or more of the following cases.

As an example, when the higher layer (e.g., RRC) requests reconfiguration of the PDCP entity, when the higher layer requests PDCP data recovery, when the higher layer requests uplink data switching, and when the higher layer indicates DRB/PDCP-entity reconfiguration for mapping the PDU-Set (e.g., for reconfiguration indicating PDU-Set remapping), the PDCP state report including PDU-Set-related information may be triggered.

As another example, the corresponding state reporting may be applied to AM DRB and/or UM DRB.

If the PDCP state report is triggered, the receiving PDCP entity may compile the PDCP state report.

The corresponding information may include an uplink PDCP SN/COUNT transmitter state and a downlink PDCP SN/COUNT receiver state of the DRB mapped to the PDU-Set. Alternatively, the uplink PDU-Set-related information transmitter state and the downlink PDU-Set-related information receiver state of the SDAP-SDU(s)/PDU(s) mapped to the PDU-Set may be included. Furthermore, the source base station may include an uplink PDU-Set SN transmitter state and a downlink PDU-Set SN receiver state of the DRB mapped to the PDU-Set. Additionally, the transmitter state for one or more pieces of information among the uplink PDU-Set-related information of the DRB mapped to the PDU-Set and the receiver state for one or more pieces of information among the downlink PDU-Set-related information may be included. As another example, the uplink PDU-Set-related information (e.g., one or more pieces of information among arbitrary PDU-Set-related information such as PDU-Set SN) transmitter state may include PDU-Set information (e.g., one or more pieces of information among the arbitrary PDU-Set-related information such as PDU-Set SN) of the first lost uplink PDU-Set. As another example, the downlink PDU-Set-related information (e.g., one or more pieces of information among the arbitrary PDU-Set-related information such as PDU-Set SN) receiver state may include the next PDU-Set-related information (e.g., one or more pieces of information among arbitrary PDU-Set-related information such as PDU-Set SN) for the PDU-Set that does not have the PDU-Set SN. As further another example, the downlink PDU-Set-related information (e.g., one or more pieces of information among arbitrary PDU-Set-related information such as PDU-Set SN) receiver state may include the smallest PDU-Set SN that the UE has not yet received. As still another example, the downlink PDU-Set-related information (e.g., one or more pieces of information among arbitrary PDU-Set-related information such as PDU-Set SN) receiver state may include the smallest PDU-Set SN in which all the packets/PDUs belonging to the corresponding PDU-Set have not yet been received by the UE. As yet another example, the bitmap field may be configured, not including the first lost PDU-Set (or the PDU having the PDU-Set-related information, or PDU-Set SN, or PDU-Set including the lost PDCP-SDU/SDAP-SDU), but including the PDU-Set PDUs, out of the last order (or PDU having the PDU-Set-related information, or PDU-Set SN, or PDU-Set including the lost PDCP-SDUs/SDAP-SDUs). As further still another example, the bitmap field may be configured, including the first lost PDU-Set PDU but not including the PDU-Set PDUs out of the last order.

### Distinct processing of PDU Set in L2 sublayer

When one or more PDU-Set(s) are mapped to one DRB and processed, there may be provided a method for distinctly processing the same in a corresponding L2 sublayer in order to support distinct processing for each PDU-Set (e.g., for each PDU-Set-ID, for each PDU-Set sequence number having the same PDU-Set-ID, or for each PDU-Set importance/priority having the same PDU-Set-ID) in any L2 sublayer (e.g., SDAP/PDCP/RLC/MAC).

For example, one or more RLC entities may be associated to the above-described PDU-Set-related information to provide distinct processing for each PDU set.

For example, for the data radio bearer mapped to the PDU-Set, each PDCP entity may be associated with one or more UM RLC entities (for the same direction). (e.g., 1xN UM RLC entities, where N is 1,2,3,... )

As another example, for the data radio bearer mapped to the PDU-Set, each PDCP entity may be associated with one or more AM RLC entities. (e.g., 1xN AM RLC entities, where N is 1,2,3,... )

As another example, the number (N) of the corresponding UM/AM RLC entities may be associated with the PDU-Set identifier and/or PDU-Set sequence number described above. For example, when the PDU-Set identifier and/or the PDU-Set sequence number have n bits (where n is a natural number, e.g., 1,2,3,4...), it may be N=2*n. For example, when the corresponding information has 2 bits, there may be 4 RLC entities. The base station may indicate, to the UE, information for associating the PDU-Set identifier or PDU-Set sequence number to the corresponding RLC entity through RRC signaling. Alternatively, the PDU-Set SDU(s)/PDU(s) associated with the corresponding PDU-Set identifier or PDU-Set sequence number may be associated with the corresponding RLC entity through the modular operation. The transmitting PDCP entity may submit the PDCP PDU belonging to the corresponding PDU Set to the associated RLC entity.

As another example, the number (N) of the corresponding UM/AM RLC entities may be associated with the number of PDU-Set(s) having different PDU-Set-importance/priority values associated with the PDU-Set(s) to be transmitted through the corresponding radio bearer. For example, if the PDU-Set SDU(s)/PDU(s) having two PDU-Set-importances/priorities are transmitted through the corresponding radio bearer, the number of the corresponding radio bearers may be 2. The base station may indicate, to the UE, information for associating the PDU-Set-importance/priority to the corresponding RLC entity through RRC signaling. The transmitting PDCP entity may submit the PDCP PDU belonging to the corresponding PDU Set to the associated RLC entity.

As another example, the configuration of the logical channel for the RLC bearer through the corresponding RLC entity may include a parameter associated with one or more pieces of information among the above-described PDU-Set-related information. For example, a parameter associated with PDU-Set-importance/priority may be included. Through this, the MAC layer may process data using the corresponding information in the logical channel priority processor or data transmission/retransmission.

As another example, one RLC entity may include one or more of the above-described PDU-Set-related information on the RLC header and provide distinct processing for each PDU Set. This may be applied by exchanging the SDAP with RLC in the previous embodiment.

As another example, the configuration of the logical channel for the RLC bearer through the RLC entity may include a parameter associated with one or more of the above-described PDU-Set-related information. For example, a parameter associated with PDU-Set-importance/priority may be included. Through this, the MAC layer may process data using the corresponding information in the logical channel priority processor or data transmission/retransmission.

### Activation/deactivation/switching/fallback of PDU Set processing

In order for the UE and the base station to map and process one or more PDU-Set(s) to one DRB, various functions need to be operated in order to support distinct processing for each PDU-Set (e.g., for each PDU-Set-ID, for each PDU-Set sequence number having the same PDU-Set-ID, or for each PDU-Set importance/priority having the same PDU-Set-ID) in L2 sublayers (e.g., SDAP/PDCP/RLC/MAC). This may be a load/burden on each sublayer. Therefore, the UE or the base station may need to operate by defining L2 signaling for instructing to activate/deactivate the corresponding function. For example, one or more of the SDAP control PDU, the PDCP control PDU, the RLC control PDU, and the MAC control element may be used to instruct activation/deactivation/switching/fallback of PDU set processing for the corresponding radio bearer on each sublayer. The sublayer receiving the corresponding signaling may transfer the corresponding information to another sublayer (higher sublayer or lower sublayer) where the corresponding function operates. The corresponding sublayer may perform a corresponding operation.

According to the embodiments described above, packet data may be effectively processed based on traffic characteristics in a wireless network by utilizing a unit of information/field generated in a service/application operating from a higher layer. Hereinafter, a UE and a base station capable of performing the above-described embodiments will be briefly described. Embodiments not described below may also be performed by the UE and the base station based on the above-described operations.

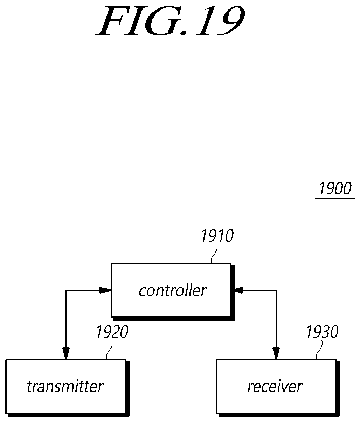

FIG. 19 is a block diagram illustrating a UE according to an embodiment.

Referring to FIG. 19, a UE 1900 processing an application data flow may include a receiver 1930 receiving a higher layer message including radio resource configuration information that is configured to transmit/receive specific application data and a controller 1910 configuring the radio resource configuration information in the UE and distinctly processing user plane data of application data based on the radio resource configuration information.

According to an embodiment, the radio resource configuration information may include protocol data unit (PDU) Set information including at least one of a PDU Set sequence number, PDU Set end PDU indication information, and PDU Set importance information. Alternatively, the radio resource configuration information may include at least one of assistance information for an application traffic characteristic and PDU set information.

According to an embodiment, the application data flow (or application data) may be a PDU set of specific application data having a high correlation between data flows such as XR or CG. The receiver 1930 may receive, from the base station, radio resource configuration information associated with assistance information that may help address the characteristics of the corresponding application traffic. Alternatively, the receiver 1930 may receive radio resource configuration information associated with the PDU set information from the base station. Furthermore, the receiver 1930 may receive the radio resource configuration information associated with the assistance information and the PDU Set information from the base station.

According to an embodiment, the assistance information may include at least one of uplink or downlink period information about the application data flow and jitter information associated with the period information. As described above, the application data flow may cause uplink or downlink at a non-integer period according to the traffic characteristics of the corresponding application. Further, the application data flow may cause uplink or downlink transmission/reception with a certain level of jitter. Accordingly, the period information may be set to a non-integer value. Alternatively, the period information may be set to an integer value. By using the assistance information, the UE may perform effective application traffic processing by applying transmission/reception parameters considering the characteristics of the corresponding application data flow.

According to another embodiment, the PDU set information may include at least one of a PDU Set sequence number, PDU Set end PDU indication information, and PDU Set importance information. For example, the PDU set information may include a PDU set sequence number used in the corresponding application. Alternatively, the PDU set information may include indication information that indicates the last PDU of the PDU set where the corresponding application is terminated. Alternatively, the PDU set information may include importance information applied to the PDU set. One PDU set may be set to have the same importance.

Meanwhile, the higher layer message may be an RRC message. For example, the higher layer message may include an N1 session management (SM) container including a PDU Set QoS parameter. In other words, the UE may identify the N1 SM container included in the higher layer message and apply it to the corresponding application data flow processing using the PDU Set QoS parameter included in the N1 SM container. Alternatively, the higher layer message may be a message broadcast by the base station.

The controller 1910 may store the received radio resource configuration information in the UE. Alternatively, the controller 1910 may store the radio resource configuration information as the parameter value of the UE and use the same when needed later.

According to an embodiment, the controller 1910 may configure a radio link control (RLC) entity in association with at least one piece of information included in PDU Set information.

According to another embodiment, the radio resource configuration information may include one or more of DRX configuration information that supports a non-integer value based on assistance information and data radio bearer configuration information associated with one or more logical channel configurations based on PDU Set information.

According to another embodiment, the controller 1910 may configure the DRX parameter by storing or applying the DRX configuration information supporting the non-integer value included in the wireless resource configuration information to the UE. Accordingly, a UE DRX operation suitable for the application data flow transmitted and received at a period set to the non-integer value may be performed.

According to another embodiment, the controller 1910 may configure the DRB of the UE using the DRB configuration information associated with the logical channel configuration included in the radio resource configuration information. The corresponding logical channel configuration is configured based on PDU Set information, and a logical channel and a DRB suitable for the application data flow may be configured in the UE.

Further, the UE 1900 may apply the radio resource configuration information to the UE and transmit and receive user plane data generated in the corresponding application layer. In this case, the controller 1910 may process the user plane data of the corresponding application data distinctly from other normal data based on the radio resource configuration information.

For example, the controller 1910 may process the user plane data generated in the corresponding application layer using the data radio bearer configured using the radio resource configuration information. As another example, the controller 1910 may control the DRX operation of the UE according to the uplink or downlink key period generated as a non-integer value by applying the DRX parameter configured using the radio resource configuration information to the UE.

Meanwhile, the above-described protocol data unit (PDU) of user plane data for a specific application may be configured to include one or more pieces of information among the PDU Set sequence number, PDU Set end PDU indication information, and PDU Set importance. For example, one or more pieces of information among the PDU Set sequence number, PDU Set end PDU indication information, and PDU Set importance may be included in the service data adaptation protocol (SDAP) header or packet data convergence protocol (PDCP) header of the PDU. In other words, the SDAP header may include one or more pieces of information constituting the corresponding PDU Set information. And/or the PDCP header may include one or more pieces of information constituting the corresponding PDU Set information. Thus, the corresponding PDU Set information may be distinctly processed.

For example, the controller 1910 may discard all protocol data units (PDUs) or service data units (SDUs) associated to at least one piece of information included in the PDU Set information in the packet data convergence protocol (PDCP) entity or radio link control (RLC) entity. In other words, all associated PDU Sets may be discarded.

The protocol data unit (PDU) or the service data unit (SDU) may be discarded based on the timer distinctly configured per PDU Set information. The corresponding timer may be included in the radio resource configuration information and configured in the UE. Further, the corresponding timer may be configured and operated in association for each PDU Set. Meanwhile, if the timer expires, the controller 1910 may instruct the lower layer to discard the protocol data unit (PDU) or the service data unit (SDU). For example, if the timer expires, the PDCP entity may instruct the RLC entity to discard the PDU or SDU associated with the corresponding timer.

Further, the controller 1910 controls the overall operation of the UE 1900 according to session/QoS/policy control for providing packet processing based on information generated in an application layer required to perform the above-described disclosure.

The transmitter 1920 and the receiver 1930 are used to transmit or receive signals or messages or data necessary for performing the above-described disclosure, with the base station or core network entity.

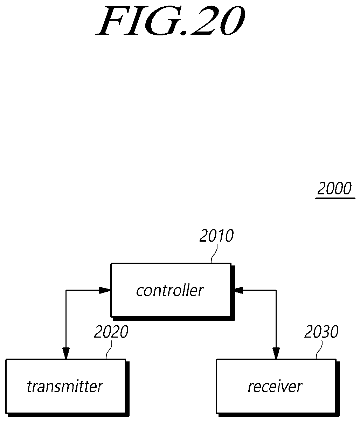

FIG. 20 is a block diagram illustrating a base station according to an embodiment.

Referring to FIG. 20, a base station 2000 processing an application data flow may include a transmitter 2020 transmitting a higher layer message including radio resource configuration information that is configured to transmit/receive specific application data to a UE and a controller 2010 distinctly processing user plane data of application data based on the radio resource configuration information.

According to an embodiment, the radio resource configuration information may include protocol data unit (PDU) Set information including at least one of a PDU Set sequence number, PDU Set end PDU indication information, and PDU Set importance information. Alternatively, the radio resource configuration information may include at least one of assistance information for an application traffic characteristic and PDU set information. For example, the application data flow (or application data) may be a PDU set of specific application data having a high correlation between data flows such as XR or CG. The transmitter 2020 may transmit, to the UE, radio resource configuration information associated with assistance information that may help address the characteristics of the corresponding application traffic. Alternatively, the transmitter 2020 may transmit radio resource configuration information associated with the PDU set information to the UE. Alternatively, the transmitter 2020 may transmit, to the UE, the radio resource configuration information associated with the assistance information and the PDU Set information.

According to an embodiment, the assistance information may include at least one of uplink or downlink period information about the application data flow and jitter information associated with the period information. As described above, the application data flow may cause uplink or downlink at a non-integer period based on the traffic characteristics of the corresponding application. Further, the application data flow may cause uplink or downlink transmission/reception with a certain level of jitter. Accordingly, the period information may be set to a non-integer value. Alternatively, the period information may be set to an integer value. By using the assistance information, the UE may effectively process application traffic by applying transmission/reception parameters based on the characteristics of the corresponding application data flow.

According to another embodiment, the PDU set information may include at least one of a PDU Set sequence number, PDU Set end PDU indication information, and PDU Set importance information. For example, the PDU set information may include a PDU set sequence number used in the corresponding application. Alternatively, the PDU set information may include indication information that indicates the last PDU of the PDU set where the corresponding application is terminated. Alternatively, the PDU set information may include importance information applied to the PDU set. One PDU set may be set to have the same importance.

The higher layer message may be an RRC message. For example, the higher layer message may include an N1 session management (SM) container including a PDU Set QoS parameter. Alternatively, the higher layer message may be a message broadcast by the base station.

Meanwhile, to distinctly process the user plane data of the specific application data, it is required to recognize the protocol data unit (PDU) of the corresponding user plane data.

To that end, the PDU of user plane data for a specific application may be configured to include one or more of the PDU Set sequence number, PDU Set end PDU indication information, and PDU Set importance. For example, one or more of the PDU Set sequence number, PDU Set end PDU indication information, and PDU Set importance may be included in the service data adaptation protocol (SDAP) header or packet data convergence protocol (PDCP) header of the PDU. In other words, the SDAP header may include one or more information constituting the corresponding PDU Set information. And/or the PDCP header may include one or more pieces of information constituting the corresponding PDU Set information. Thus, the corresponding PDU Set information may be distinctly processed.

The protocol data unit (PDU) or the service data unit (SDU) may be discarded based on the timer distinctly configured per PDU Set information. The corresponding timer may be included in the radio resource configuration information. Further, the corresponding timer may be configured and operated in association for each PDU Set. Meanwhile, if the timer expires, the lower layer may be instructed to discard the protocol data unit (PDU) or the service data unit (SDU). For example, if the timer expires, the PDCP entity may instruct the RLC entity to discard the PDU or SDU associated with the corresponding timer.

Further, the controller 2010 controls the overall operation of the base station 2000 according to session/QoS/policy control for providing packet processing based on information generated in an application layer required to perform the above-described disclosure.

The transmitter 2020 and the receiver 2030 are used to transmit or receive signals or messages or data necessary for performing the above-described disclosure, with the UE or core network entity.

The embodiments described above may be supported by the standard documents disclosed in at least one of the radio access systems such as IEEE 802, 3GPP, and 3GPP2. That is, the steps, configurations, and parts, which have not been described in the present embodiments, may be supported by the above-mentioned standard documents for clarifying the technical concept of the disclosure. In addition, all terms disclosed herein may be described by the standard documents set forth above.

The above-described embodiments may be implemented by any of various means. For example, the present embodiments may be implemented as hardware, firmware, software, or a combination thereof.

In the case of implementation by hardware, the method according to the present embodiments may be implemented as at least one of an application specific integrated circuit (ASIC), a digital signal processor (DSP), a digital signal processing device (DSPD), a programmable logic device (PLD), a field programmable gate array (FPGA), a processor, a controller, a microcontroller, or a microprocessor.

In the case of implementation by firmware or software, the method according to the present embodiments may be implemented in the form of an apparatus, a procedure, or a function for performing the functions or operations described above. Software code may be stored in a memory unit, and may be driven by the processor. The memory unit may be provided inside or outside the processor, and may exchange data with the processor by any of various well-known means.

In addition, the terms "system", "processor", "controller", "component", "module", "interface", "model", "unit", and the like may generally mean computer-related entity hardware, a combination of hardware and software, software, or running software. For example, the above-described components may be, but are not limited to, a process driven by a processor, a processor, a controller, a control processor, an entity, an execution thread, a program and/or a computer. For example, both the application that is running in a controller or a processor and the controller or the processor may be components. One or more components may be provided in a process and/or an execution thread, and the components may be provided in a single device (e.g., a system, a computing device, etc.), or may be distributed over two or more devices.

The above embodiments of the present disclosure have been described only for illustrative purposes, and those skilled in the art will appreciate that various modifications and changes may be made thereto without departing from the scope and spirit of the disclosure. Further, the embodiments of the disclosure are not intended to limit, but are intended to illustrate the technical idea of the disclosure, and therefore the scope of the technical idea of the disclosure is not limited by these embodiments. The scope of the present disclosure shall be construed on the basis of the accompanying claims in such a manner that all of the technical ideas included within the scope equivalent to the claims belong to the present disclosure.

### CROSS-REFERENCE TO RELATED APPLICATION

This application claims priority to Korean Patent Application Nos. 10-2022-0053088, filed on April 28, 2022, and 10-2023-0045834, filed on April 7, 2023, in the Korean Intellectual Property Office, the disclosure of which is incorporated by reference herein in its entirety. Further, all the content claiming priority in other countries than the U.S.A for the same reason is incorporated by reference herein as reference documents.

## Claims

1. A method for processing an application data flow by a user equipment (UE), the method comprising:
receiving a higher layer message including radio resource configuration information configured to transmit/receive specific application data;
configuring the radio resource configuration information in the UE; and
distinctly processing user plane data of the application data based on the radio resource configuration information.

2. The method of claim 1, wherein the radio resource configuration information includes protocol data unit (PDU) Set information including at least one piece of information among a PDU Set sequence number, PDU Set end PDU indication information, and PDU Set importance information.

3. The method of claim 2, wherein configuring the radio resource configuration information in the UE configures a radio link control (RLC) entity in association with at least one piece of information included in PDU Set information.

4. The method of claim 1, wherein a protocol data unit (PDU) of the user plane data includes one or more pieces of information among a PDU Set sequence number, PDU Set end PDU indication information, and PDU Set importance information, and
wherein one or more pieces of information among the PDU Set sequence number, PDU Set end PDU indication information, and PDU Set importance are included in a service data adaptation protocol (SDAP) header or a packet data convergence protocol (PDCP) header of the PDU.

5. The method of claim 1, wherein distinctly processing discards all protocol data units (PDUs) or service data units (SDUs) associated with at least one piece of information included in PDU Set information in a packet data convergence protocol (PDCP) entity or a radio link control (RLC) entity.

6. The method of claim 5, wherein the protocol data unit (PDU) or the service data unit (SDU) is discarded based on a timer configured distinctly for each piece of the PDU Set information.

7. The method of claim 5, wherein distinctly processing, when the timer expires, instructs a lower layer to discard the protocol data unit (PDU) or the service data unit (SDU).

8. A method for processing an application data flow by a base station, the method comprising:
transmitting, to a UE, a higher layer message including radio resource configuration information configured to transmit/receive specific application data; and
distinctly processing user plane data of the application data based on the radio resource configuration information.

9. The method of claim 8, wherein the radio resource configuration information includes protocol data unit (PDU) Set information including at least one piece of information among a PDU Set sequence number, PDU Set end PDU indication information, and PDU Set importance information.

10. The method of claim 8, wherein a protocol data unit (PDU) of the user plane data includes one or more pieces of information among a PDU Set sequence number, PDU Set end PDU indication information, and PDU Set importance information, and
wherein one or more pieces of information among the PDU Set sequence number, PDU Set end PDU indication information, and PDU Set importance are included in a service data adaptation protocol (SDAP) header or a packet data convergence protocol (PDCP) header of the PDU.

11. A UE processing an application data flow, comprising:
a receiver receiving a higher layer message including radio resource configuration information configured to transmit/receive specific application data; and
a controller configuring the radio resource configuration information in the UE and distinctly processing user plane data of the application data based on the radio resource configuration information.

12. The UE of claim 11, wherein the radio resource configuration information includes protocol data unit (PDU) Set information including at least one piece of information among a PDU Set sequence number, PDU Set end PDU indication information, and PDU Set importance information.

13. The UE of claim 12, wherein the controller configures a radio link control (RLC) entity in association with at least one piece of information included in PDU Set information.

14. The UE of claim 11, wherein a protocol data unit (PDU) of the user plane data includes one or more pieces of information among a PDU Set sequence number, PDU Set end PDU indication information, and PDU Set importance information, and
wherein one or more pieces of information among the PDU Set sequence number, PDU Set end PDU indication information, and PDU Set importance are included in a service data adaptation protocol (SDAP) header or a packet data convergence protocol (PDCP) header of the PDU.

15. The UE of claim 11, wherein the controller discards all protocol data units (PDUs) or service data units (SDUs) associated with at least one piece of information included in PDU Set information in a packet data convergence protocol (PDCP) entity or a radio link control (RLC) entity.

16. The UE of claim 15, wherein the protocol data unit (PDU) or the service data unit (SDU) is discarded based on a timer configured distinctly for each piece of the PDU Set information.

17. The UE of claim 15, wherein the controller, when the timer expires, instructs a lower layer to discard the protocol data unit (PDU) or the service data unit (SDU).
